# EUROPEAN PATENT APPLICATION

(11) **EP 4 598 032 A1**
(43) Date of publication of application: **06.08.2025**
(21) Application number: 22961078.7
(22) Date of filing: 29.09.2022
(51) Int. Cl.: H04N 21/414, H04N 21/426, H04N 21/436, B60K 35/00

(54) **SIGNAL PROCESSING DEVICE AND VEHICLE DISPLAY DEVICE COMPRISING SAME**

(71) Applicant: LG Electronics Inc., Yeongdeungpo-gu Seoul 07336 (KR)
(72) Inventor: HAN, Dongwoo, Seoul 06772 (KR); KIM, Woosung, Seoul 06772 (KR)
(74) Representative: Vossius & Partner Patentanwälte Rechtsanwälte mbB
(86) International application number: PCT/KR2022/014639
(87) International publication number: WO 2024/071475

(57) **Abstract**

The present disclosure relates to a signal processing device and a vehicle display apparatus including the same. The signal processing device according to an embodiment of the present disclosure include: an interface configured to exchange data with a second signal processing device connected to a first device; a virtual device driver which is emulated to receive data from the first device; and a display driver configured to output image data to the vehicle display based on data from the virtual device driver. Accordingly, it is possible to efficiently perform data transmission between a plurality of signal processing devices in a vehicle.

## Description

### BACKGROUND

### 1. Technical Field

The present disclosure relates to a signal processing device and a vehicle display apparatus including the same, and more particularly to a signal processing device capable of efficiently performing data transmission between a plurality of signal processing devices in a vehicle, and a vehicle display apparatus including the signal processing device.

### 2. Description of the Related Art

A vehicle is a machine that allows a user to move in a desired direction. A typical example of the vehicle is an automobile.

Meanwhile, a display apparatus for vehicles is located in the vehicle for convenience of users who use the vehicle.

The vehicle display apparatus requires a high-performance computing system as a software function becomes an important part of the display apparatus.

Accordingly, the high-performance integrated vehicle display apparatus includes a plurality of signal processing devices.

For example, the plurality of signal processing devices can be directly connected to a high-speed data bus, e.g., PCI Express bus.

In this case, proper protocols and Application Programming Interfaces (APIs) need to be defined and implemented between the plurality of signal processing devices.

However, there is a problem in that the protocols and APIs should be defined separately for each function or service, thereby increasing the complexity of system design and implementation.

### SUMMARY

It is an objective of the present disclosure to provide a signal processing device capable of efficiently performing data transmission between a plurality of signal processing devices in a vehicle, and a vehicle display apparatus including the signal processing device.

It is another objective of the present disclosure to provide a signal processing device capable of abstracting data in kernel space during data transmission between a plurality of signal processing devices in a vehicle, and a vehicle display apparatus including the signal processing device.

It is yet another objective of the present disclosure to provide a signal processing device that dispenses with adding a communication protocol during data transmission between a plurality of signal processing devices in a vehicle, and a vehicle display apparatus including the signal processing device.

It is yet another objective of the present disclosure to provide a signal processing device capable of allowing data from a plurality of devices to be transmitted between a plurality of signal processing devices in a vehicle, and a vehicle display apparatus including the signal processing device.

In accordance with an aspect of the present disclosure, the above and other objectives can be accomplished by providing a signal processing device and a vehicle display apparatus including the same, which include: an interface configured to exchange data with a second signal processing device connected to a first device; a virtual device driver which is emulated to receive data from the first device; and a display driver configured to output image data to a vehicle display based on data from the virtual device driver.

Meanwhile, the interface can include a high-speed bus driver configured to exchange data via a high-speed data bus channel.

Meanwhile, the interface can be configured to receive the data via a device driver, a device renderer, and a second interface in the second signal processing device.

Meanwhile, the interface can be configured to receive the data which is abstracted in kernel space.

Meanwhile, the interface and the virtual device driver can be configured to operate based on the kernel space.

Meanwhile, the virtual device driver can be configured to control register and data buffer, and to receive an interrupt.

Meanwhile, the signal processing device can further include a device muxer configured to mux data from each of a plurality of devices, wherein the interface can be configured to transmit the muxed data to the second signal processing device.

Meanwhile, the virtual device driver can include the device muxer.

Meanwhile, the device muxer can configured to process the data from the plurality of devices based on priority.

Meanwhile, the muxed data output from the device muxer can include a header containing ID information of the plurality of devices, and a payload containing a portion of the data from each of the plurality of devices.

Meanwhile, the signal processing device can further include a device demuxer configured to demux the muxed data received from the second signal processing device, wherein the display driver can be configured to output image data to the vehicle display based on data from the demuxer.

Meanwhile, the signal processing device can further include a service manager configured to communicate with the second signal processing device based on the interface and a separate communication channel, wherein the service manager can be configured to terminate communication with the device renderer in the second signal processing device and to terminate communication with the interface, based on an unload event for the first device.

Meanwhile, based on a load event for a second device connected to the second signal processing device, the service manager can be configured to communicate with the interface and a second device renderer corresponding to the second device in the second signal processing device.

Meanwhile, the first device can include a camera, a lidar sensor, a radar sensor, or a sensor device.

In accordance with another aspect of the present disclosure, the above and other objectives can be accomplished by providing a signal processing device and a vehicle display apparatus including the same, which include: an interface configured to exchange data with a second signal processing device connected to a camera device; a virtual device driver which is emulated to receive data from the camera device; a display driver configured to output image data to a vehicle display based on data from the virtual device driver; and a graphic renderer configured to perform rendering on the data of the display, wherein the interface is configured to transmit data from the graphic renderer to the second signal processing device.

Meanwhile, the signal processing device can further include an input device renderer configured to perform rendering on data from an input device, wherein the interface can be configured to further transmit data from the input device renderer to the second signal processing device.

Meanwhile, the signal processing device can further include: an audio output renderer configured to perform rendering on data from an audio output device; and an audio input renderer configured to perform rendering on data from an audio input device, wherein the interface can be configured to transmit data from the audio output renderer or the audio input renderer to the second signal processing device.

Meanwhile, the signal processing device can further include a second virtual driver which is emulated to receive data from a storage device connected to the second signal processing device.

### EFFECTS OF THE DISCLOSURE

A signal processing device and a vehicle display apparatus including the same according to an embodiment of the present disclosure include: an interface configured to exchange data with a second signal processing device connected to a first device; a virtual device driver which is emulated to receive data from the first device; and a display driver configured to output image data to a vehicle display based on data from the virtual device driver. Accordingly, it is possible to efficiently perform data transmission between the plurality of signal processing devices in a vehicle. In addition, it is possible to dispense with adding a communication protocol during data transmission between the plurality of signal processing devices in a vehicle.

Meanwhile, the interface can include a high-speed bus driver configured to exchange data via a high-speed data bus channel. Accordingly, it is possible to efficiently perform data transmission between the plurality of signal processing devices in a vehicle.

Meanwhile, the interface can be configured to receive the data via a device driver, a device renderer, and a second interface in the second signal processing device. Accordingly, it is possible to efficiently perform data transmission between the plurality of signal processing devices in a vehicle.

Meanwhile, the interface can be configured to receive the data which is abstracted in kernel space. Accordingly, data can be abstracted in kernel space during data transmission between the plurality of signal processing devices in a vehicle, and data is not required to be modified in middleware or framework. In addition, it is possible to dispense with adding a communication protocol during data transmission between the plurality of signal processing devices in a vehicle.

Meanwhile, the interface and the virtual device driver can be configured to operate based on the kernel space. Accordingly, data can be abstracted in kernel space during data transmission between the plurality of signal processing devices in a vehicle, and data is not required to be modified in middleware or framework. In addition, it is possible to dispense with adding a communication protocol during data transmission between the plurality of signal processing devices in a vehicle.

Meanwhile, the virtual device driver can be configured to control register and data buffer, and to receive an interrupt. Accordingly, it is possible to efficiently perform data transmission between the plurality of signal processing devices in a vehicle.

Meanwhile, the signal processing device can further include a device muxer configured to mux data from each of a plurality of devices, wherein the interface can be configured to transmit the muxed data to the second signal processing device. Accordingly, data from a plurality of devices can be transmitted between the plurality of signal processing devices in a vehicle.

Meanwhile, the virtual device driver can include the device muxer. Accordingly, data from a plurality of devices can be transmitted between the plurality of signal processing devices in a vehicle.

Meanwhile, the device muxer can configured to process the data from the plurality of devices based on priority. Accordingly, data from a plurality of devices can be transmitted between the plurality of signal processing devices in a vehicle.

Meanwhile, the muxed data output from the device muxer can include a header containing ID information of the plurality of devices, and a payload containing a portion of the data from each of the plurality of devices. Accordingly, data from a plurality of devices can be transmitted between the plurality of signal processing devices in a vehicle.

Meanwhile, the signal processing device can further include a device demuxer configured to demux the muxed data received from the second signal processing device, wherein the display driver can be configured to output image data to the vehicle display based on data from the demuxer. Accordingly, it is possible to transmit data from a plurality of devices between the plurality of signal processing devices in a vehicle.

Meanwhile, the signal processing device can further include a service manager configured to communicate with the second signal processing device based on the interface and a separate communication channel, wherein the service manager can be configured to terminate communication with the device renderer in the second signal processing device and to terminate communication with the interface, based on an unload event for the first device. Accordingly, data from a plurality of devices can be transmitted between the plurality of signal processing devices in a vehicle.

Meanwhile, based on a load event for a second device connected to the second signal processing device, the service manager can be configured to communicate with the interface and a second device renderer corresponding to the second device in the second signal processing device.

Meanwhile, the first device can include a camera, a lidar sensor, a radar sensor, or a sensor device. Accordingly, data from various devices can be transmitted between the plurality of signal processing devices in a vehicle.

A signal processing device and a vehicle display apparatus including the same according to another embodiment of the present disclosure include: an interface configured to exchange data with a second signal processing device connected to a camera device; a virtual device driver which is emulated to receive data from the camera device; a display driver configured to output image data to a vehicle display based on data from the virtual device driver; and a graphic renderer configured to perform rendering on the data of the display, wherein the interface is configured to transmit data from the graphic renderer to the second signal processing device. Accordingly, it is possible to efficiently perform data transmission between the plurality of signal processing devices in a vehicle. In addition, it is possible to dispense with adding a communication protocol during data transmission between the plurality of signal processing devices in a vehicle.

Meanwhile, the signal processing device can further include an input device renderer configured to perform rendering on data from an input device, wherein the interface can be configured to further transmit data from the input device renderer to the second signal processing device. Accordingly, data from various devices can be transmitted between the plurality of signal processing devices in a vehicle.

Meanwhile, the signal processing device can further include: an audio output renderer configured to perform rendering on data from an audio output device; and an audio input renderer configured to perform rendering on data from an audio input device, wherein the interface can be configured to transmit data from the audio output renderer or the audio input renderer to the second signal processing device. Accordingly, data from various devices can be transmitted between the plurality of signal processing devices in a vehicle.

Meanwhile, the signal processing device can further include a second virtual driver which is emulated to receive data from a storage device connected to the second signal processing device. Accordingly, data from various devices can be transmitted between the plurality of signal processing devices in a vehicle.

### BRIEF DESCRIPTION OF THE DRAWINGS

FIG. 1A is a view showing an example of the exterior and interior of a vehicle;
FIG. 1B is a view showing another example of the interior of the vehicle;
FIG. 2 is a view showing the external appearance of a display apparatus for vehicles according to an embodiment of the present disclosure;
FIG. 3 illustrates an example of an internal block diagram of the display apparatus for vehicles of FIG. 2;
FIG. 4 is a view showing a system executed in a signal processing device related to the present disclosure;
FIG. 5 is a view showing an example of a system executed in a signal processing device according to an embodiment of the present disclosure;
FIG. 6 is a view referred to in the description of operation of the system executed in the signal processing device according to the embodiment of the present disclosure;
FIG. 7 is a diagram illustrating a plurality of signal processing devices in a vehicle display apparatus according to an embodiment of the present disclosure;
FIGS. 8A and 8B are diagrams illustrating various examples of data transmission between a plurality of signal processing devices associated with the present disclosure;
FIG. 9 is a diagram referred to in the description of data transmission between a plurality of signal processing devices associated with the present disclosure;
FIG. 10 is a diagram illustrating data transmission between a plurality of signal processing devices according to an embodiment of the present disclosure;
FIGS. 11 to 22 are diagrams referred to in the description of FIG. 10; and
FIG. 23 is a diagram illustrating an example of a signal processing system including a plurality of signal processing devices according to an embodiment of the present disclosure.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

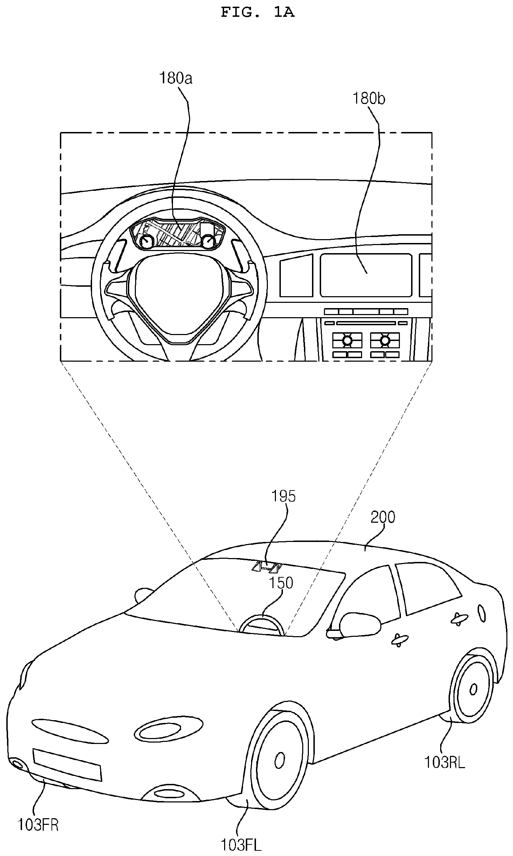

FIG. 1A is a view showing an example of the exterior and interior of a vehicle.

Referring to the figure, a vehicle 200 is moved by a plurality of wheels 103FR, 103FL, 103RL,... rotated by a power source and a steering wheel 150 configured to adjust an advancing direction of the vehicle 200.

Meanwhile, the vehicle 200 can be provided with a camera 195 configured to acquire an image of the front of the vehicle.

Meanwhile, the vehicle 200 can be further provided therein with a plurality of displays 180a and 180b configured to display images and information.

In FIG. 1A, a cluster display 180a and an audio video navigation (AVN) display 180b are illustrated as the plurality of displays 180a and 180b. In addition, a head up display (HUD) can also be used.

Meanwhile, the audio video navigation (AVN) display 180b can also be called a center information display.

The embodiment of the present disclosure proposes a scheme for a display apparatus 100 for vehicles including a plurality of displays 180a and 180b to divide data processing.

Meanwhile, the vehicle 200 described in this specification can be a concept including all of a vehicle having an engine as a power source, a hybrid vehicle having an engine and an electric motor as a power source, and an electric vehicle having an electric motor as a power source.

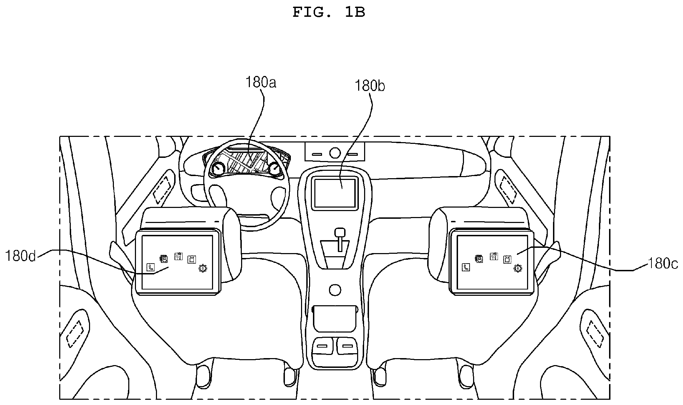

FIG. 1B is a view showing another example of the interior of the vehicle.

Referring to the figure, a cluster display 180a, an audio video navigation (AVN) display 180b, rear seat entertainment displays 180c and 180d, and a rear-view mirror display (not shown) can be located in the vehicle.

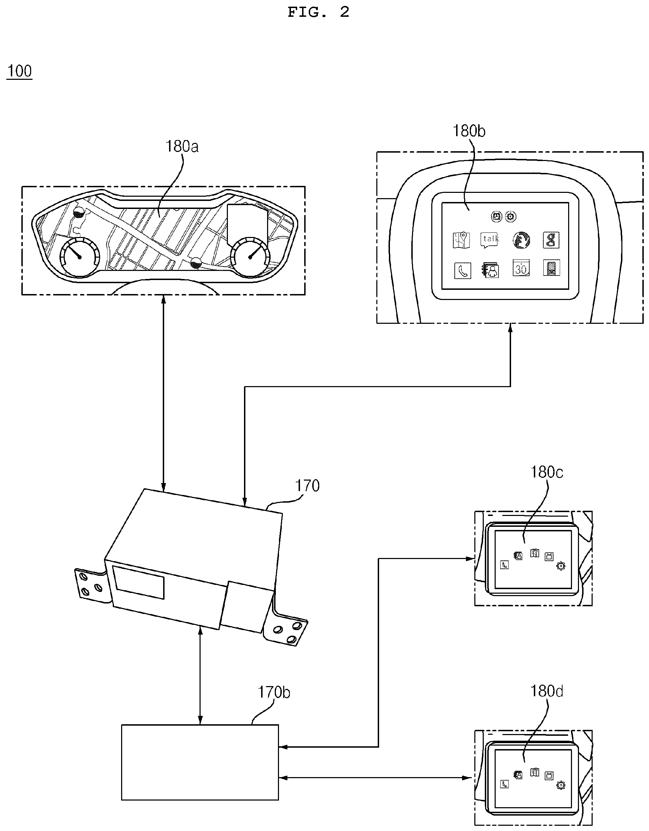

FIG. 2 is a view showing the external appearance of a display apparatus for vehicles according to an embodiment of the present disclosure.

The display apparatus 100 for vehicles according to the embodiment of the present disclosure can include a plurality of displays 180a and 180b, a signal processing device 170 configured to perform signal processing in order to display images and information on the plurality of displays 180a and 180b, at least one display 180c and 180d, and a second signal processing device 170b configured to perform signal processing in order to display images and information on the at least one display 180c and 180d.

The signal processing device 170 and the second signal processing device 170b can be disposed spaced apart from each other.

Meanwhile, the second signal processing device 170b can be operated based on a different operating system (OS) from the signal processing device 170.

The first display 180a, which is one of the plurality of displays 180a and 180b, can be a cluster display 180a configured to display a driving state and operation information, and the second display 180b can be an audio video navigation (AVN) display 180b configured to display vehicle driving information, a navigation map, various kinds of entertainment information, or an image.

In the at least one display 180c and 180d, the third display 180c can be a right rear seat entertainment display of the vehicle, and the fourth display 180d can be a left rear seat entertainment display of the vehicle.

The at least one display 180c and 180d can display driving state information, simple navigation information, various kinds of entertainment information, or an image.

The signal processing device 170 can have a processor 175 provided therein, and a server virtual machine 520 and first and second guest virtual machines 530 and 540 can be executed by a hypervisor 505 in the processor 175.

The server virtual machine 520 can correspond to a server virtual machine, and the first and second guest virtual machines can correspond to guest virtual machines.

Accordingly, data communication can be performed between the server virtual machine 520 and the first guest virtual machine 530 or the second guest virtual machine 540 according to a server interface and a client interface.

The first guest virtual machine 530 can be operated for the first display 180a, and the second guest virtual machine 540 can be operated for the second display 180b.

Meanwhile, the server virtual machine 520 in the processor 175 can share at least some of data with the first guest virtual machine 530 and the second guest virtual machine 540 for divided processing of data.

Meanwhile, the server virtual machine 520 in the processor 175 can receive and process wheel speed sensor data of the vehicle, and can transmit the processed wheel speed sensor data to at least one of the first guest virtual machine 530 or the second guest virtual machine 540, or the second signal processing device 170b. Consequently, at least one virtual machine or the second signal processing device can share the wheel speed sensor data of the vehicle.

Meanwhile, the server virtual machine 520 in the processor 175 writes some of data in a first shared memory 508a so as to be transmitted to the first guest virtual machine 530, and writes some other of data in the first shared memory 508a so as to be transmitted to the second guest virtual machine 540. The first guest virtual machine 530 and the second guest virtual machine 540 process the received data, and can be configured to write the processed data in a second shared memory (not shown). Consequently, the plurality of signal processing devices in the vehicle can efficiently perform data processing.

Meanwhile, the server virtual machine 520 in the processor 175 can be configured to set a shared memory 508 based on the hypervisor 505 for transmission of the same data to the first guest virtual machine 530 and the second guest virtual machine 540. Consequently, the first display 180a and the second display 180b in the vehicle can display the same information or the same images in a synchronized state.

The signal processing device 170 can have the processor 175 therein, and can execute the server virtual machine 520 and the first and second guest virtual machines 530 and 540 on the hypervisor 505 in the processor 175.

The server virtual machine 520 can correspond to a server virtual machine, and the first and second guest virtual machines can correspond to guest virtual machines.

Accordingly, data communication can be performed between the server virtual machine 520 and the first guest virtual machine 530 or the second guest virtual machine 540 according to a server interface and a client interface.

Meanwhile, the second signal processing device 170b can have a second processor 175b therein, and can execute a server virtual machine VIMc and a guest virtual machine VIMd on a hypervisor 505 in the second processor 175b.

Meanwhile, some of the plurality of displays 180a to 180d can be operated based on a Linux Operating System (OS), and others can be operated based on a Web Operating System (OS).

The signal processing device 170 and the second signal processing device 170b according to the embodiment of the present disclosure can divide and process data for the displays 180a to 180d configured to be operated under various operating systems.

Meanwhile, the signal processing device 170 and the second signal processing device 170b according to the embodiment of the present disclosure can be configured to also display the same information or the same images in a synchronized state in the displays 180a to 180d configured to be operated under various operating systems.

Meanwhile, the signal processing device 170 and the second signal processing device 170b according to the embodiment of the present disclosure can share at least some of data for divided processing of the data. Consequently, the plurality of signal processing devices 170 and 170b for the plurality of displays in the vehicle can divide and process data. In addition, the plurality of signal processing devices 170 and 170b can efficiently manage resources.

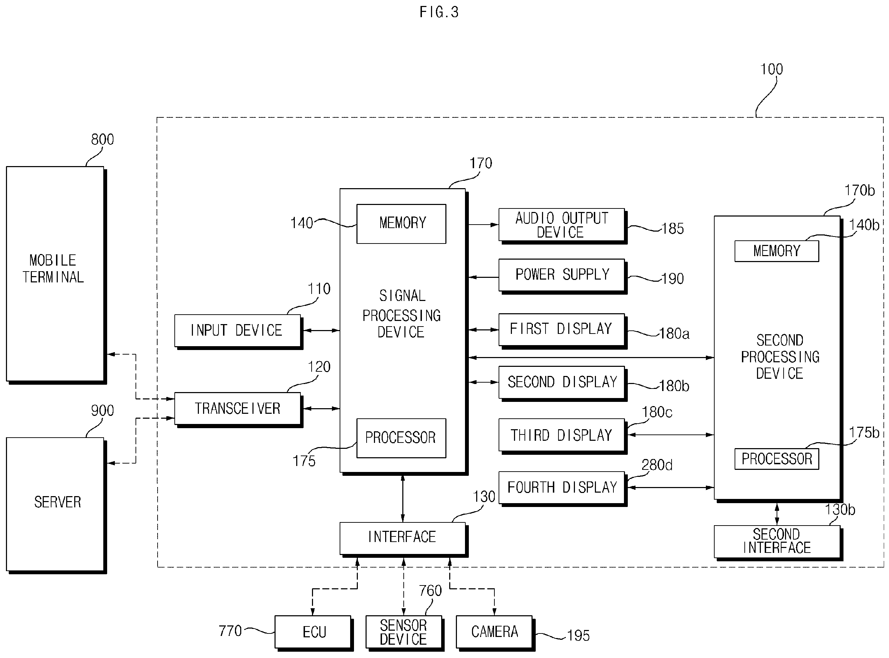

FIG. 3 illustrates an example of an internal block diagram of the display apparatus for vehicles according to the embodiment of the present disclosure.

Referring to the figure, the display apparatus 100 for vehicles according to the embodiment of the present disclosure can include an input device 110, a transceiver 120, an interface 130, a second interface 130b, a signal processing device 170, a second signal processing device 170b, a plurality of displays 180a to 180d, an audio output device 185, and a power supply 190.

The input device 110 can include a physical button or pad for button input or touch input.

Meanwhile, the input device 110 can include a microphone (not shown) for user voice input.

The transceiver 120 can wirelessly exchange data with a mobile terminal 800 or a server 900.

In particular, the transceiver 120 can wirelessly exchange data with a mobile terminal of a vehicle driver. Any of various data communication schemes, such as Bluetooth, Wi-Fi, WIFI Direct, and APIX, can be used as a wireless data communication scheme.

The transceiver 120 can receive weather information and road traffic situation information, such as transport protocol expert group (TPEG) information, from the mobile terminal 800 or the server 900. To this end, the transceiver 120 can include a mobile communication module (not shown).

The interface 130 can receive sensor information from an electronic control unit (ECU) 770 or a sensor device 760, and can transmit the received information to the signal processing device 170.

The second interface 130b can receive sensor information from the electronic control unit (ECU) 770 or the sensor device 760, and can transmit the received information to the second signal processing device 170b.

Here, the sensor information can include at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, or in-vehicle humidity information.

The sensor information can be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor. Meanwhile, the position module can include a GPS module configured to receive GPS information.

Meanwhile, the interface 130 can receive front-of-vehicle image data, side-of-vehicle image data, rear-of-vehicle image data, and obstacle-around-vehicle distance information from a camera 195 or lidar (not shown), and can transmit the received information to the signal processing device 170.

The memory 140 can store various data necessary for overall operation of the display apparatus 100 for vehicles, such as programs for processing or control of the signal processing device 170.

For example, the memory 140 can store data about the hypervisor, the server virtual machine, and the first and second guest virtual machines executed by the hypervisor in the processor 175.

Meanwhile, as shown in the figure, the memory 140 can be provided in the signal processing device 170. However, the present disclosure is not limited thereto, and the memory 140 can be disposed outside the signal processing device 170.

The audio output device 185 can convert an electrical signal from the signal processing device 170 into an audio signal, and can output the audio signal. To this end, the audio output device 185 can include a speaker.

The power supply 190 can supply power necessary to operate components under control of the signal processing device 170. In particular, the power supply 190 can receive power from a battery in the vehicle.

The signal processing device 170 can control overall operation of each device in the display apparatus 100 for vehicles.

For example, the signal processing device 170 can include a processor 175 configured to perform signal processing for at least one of the first display 180a or the second display 180b and a memory 140.

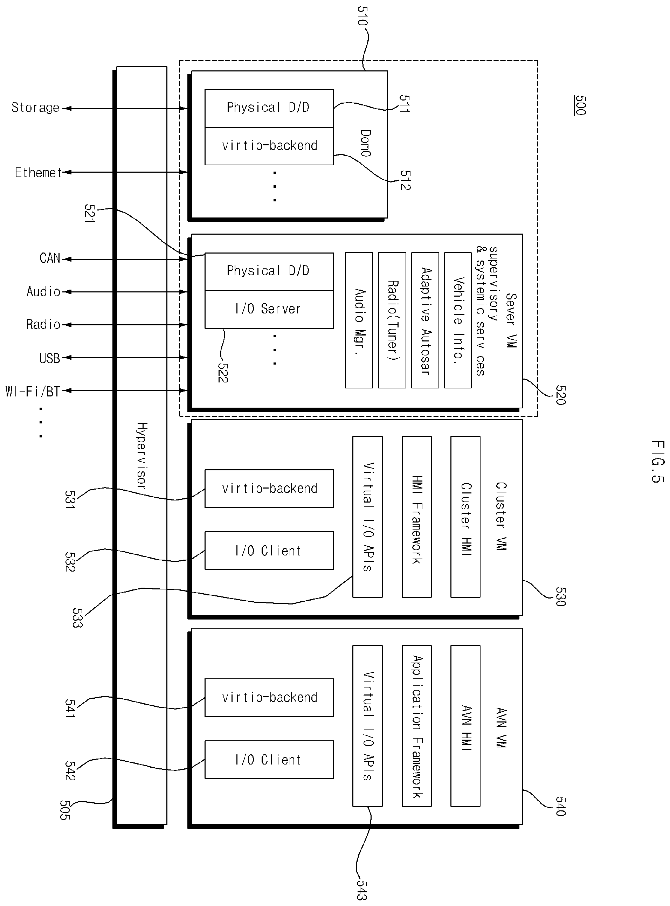

The processor 175 can execute the server virtual machine 520 and the first and second guest virtual machines 530 and 540 on the hypervisor 505 (see FIG. 5) in the processor 175.

Among the server virtual machine 520 and the first and second guest virtual machines 530 and 540 (see FIG. 5), the server virtual machine 520 can be called a server virtual machine, and the first and second guest virtual machines 530 and 540 can be called guest virtual machines.

The first guest virtual machine 530 can be operated for the first display 180a, and the second guest virtual machine 540 can be operated for the second display 180b.

For example, the server virtual machine 520 in the processor 175 can receive, process, and output vehicle sensor data, position information data, camera image data, audio data, or touch input data. Data processed only by a legacy virtual machine and data processed by the server virtual machine 520 can be distinguished from each other, whereby data processing can be efficiently performed. In particular, the server virtual machine 520 can process most of the data, whereby 1:N data sharing can be achieved.

As another example, the server virtual machine 520 can directly receive and process CAN communication data, audio data, radio data, USB data, and wireless communication data for the first and second guest virtual machines 530 and 540.

The server virtual machine 520 can transmit the processed data to the first and second guest virtual machines 530 and 540.

Consequently, only the server virtual machine 520, among the server virtual machine 520 and the first and second guest virtual machines 530 and 540, can receive communication data and external input data, and can perform signal processing, whereby load in signal processing by the other virtual machines can be reduced and 1:N data communication can be achieved, and therefore synchronization at the time of data sharing can be achieved.

Meanwhile, the server virtual machine 520 in the processor 175 writes some of data in the first shared memory 508a so as to be transmitted to the first guest virtual machine 530, and writes some other of data in the first shared memory 508a so as to be transmitted to the second guest virtual machine 540. The first guest virtual machine 530 and the second guest virtual machine 540 process the received data, and can be configured to write the processed data in the second shared memory (not shown). Consequently, data processing can be efficiently performed between the plurality of signal processing devices in the vehicle.

At this time, data can be any one of image data, audio data, navigation data, and voice recognition data.

Meanwhile, the server virtual machine 520 can process some other of data, and can be configured to write the processed data in the second shared memory (not shown). That is, the server virtual machine 520 can perform data processing in addition to the first guest virtual machine 530 and the second guest virtual machine 540.

Meanwhile, the server virtual machine 520 can generate command queues for distributed processing of data in the first guest virtual machine 530 and the second guest virtual machine 540. Consequently, the plurality of virtual machines can divide and process data.

Meanwhile, in response to the first guest virtual machine 530 and the second guest virtual machine 540 sharing the same data, the server virtual machine 520 in the processor 175 can generate one command queue. Consequently, the same data can be synchronized and shared.

Meanwhile, the server virtual machine 520 can generate command queues corresponding to the number of virtual machines for distributed processing of data.

Meanwhile, the server virtual machine 520 can be configured to transmit write at least some of data to at least one of the first guest virtual machine 530 or the second guest virtual machine 540, or the second signal processing device 170b for distributed processing of data.

For example, the server virtual machine 520 can allocate the first shared memory 508a for transmitting at least some of data to at least one of the first guest virtual machine 530 or the second guest virtual machine 540, or the second signal processing device 170b, and image data processed by the first guest virtual machine 530 or the second guest virtual machine 540 can be written in the second shared memory (not shown).

Meanwhile, the server virtual machine 520 can be configured to write data in the shared memory 508, whereby the first guest virtual machine 530 and the second guest virtual machine 540 share the same data.

For example, the server virtual machine 520 can be configured to write radio data or wireless communication data in the shared memory 508, whereby the first guest virtual machine 530 and the second guest virtual machine 540 share the same data. Consequently, 1:N data sharing can be achieved.

Eventually, the server virtual machine 520 can process most of the data, whereby 1:N data sharing can be achieved.

Meanwhile, the server virtual machine 520 in the processor 175 can be configured to set the shared memory 508 based on the hypervisor 505 in order to transmit the same data to the first guest virtual machine 530 and the second guest virtual machine 540.

That is, the server virtual machine 520 in the processor 175 can transmit the same data to the first guest virtual machine 530 and the second guest virtual machine 540 in a synchronized state using the shared memory 508 based on the hypervisor 505. Consequently, the plurality of displays 180a and 180b in the vehicle can display the same images in a synchronized state.

Meanwhile, the signal processing device 170 can process various signals, such as an audio signal, an image signal, and a data signal. To this end, the signal processing device 170 can be implemented in the form of a system on chip (SOC).

The second signal processing device 170b performs signal processing for the displays 180c and 180d for vehicles, and can include a second processor 175b and a second memory 140b to this end.

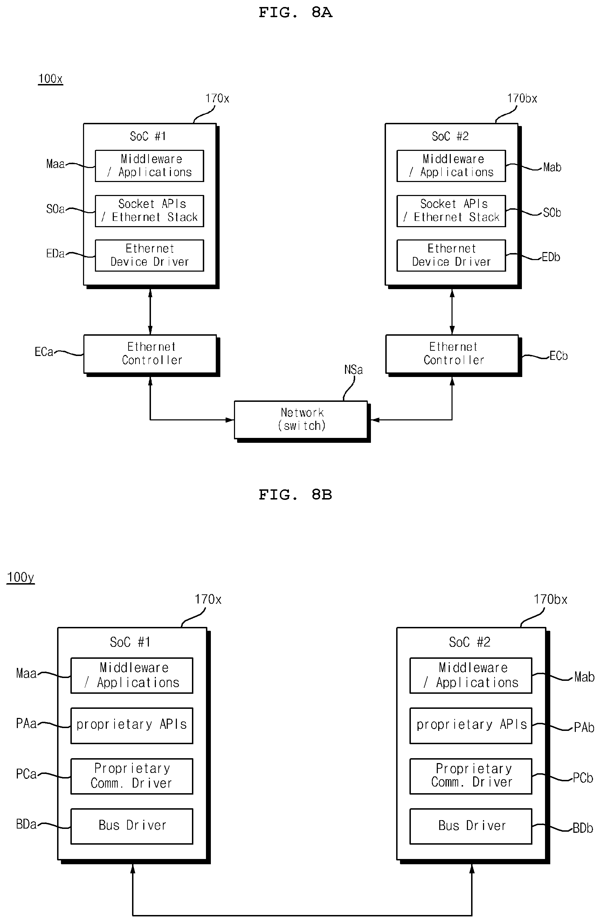

The second processor 175b can execute a plurality of virtual machines 520b, 530b, and 540b (FIG. 8) on a hypervisor 505 (FIG. 8) in the second processor 175b.

Meanwhile, the second processor 175b can also execute a server virtual machine and a guest virtual machine on the hypervisor in the second processor 175b.

For example, the server virtual machine in the second processor 175b can receive, process, and output vehicle sensor data, position information data, camera image data, audio data, or touch input data from the server virtual machine 520 in the processor 175 in the signal processing device 170.

In another example, the server virtual machine in the second processor 175b can receive and process CAN communication data, audio data, radio data, USB data, and wireless communication data from the server virtual machine 520 in the processor 175 in the signal processing device 170 for the guest virtual machine.

Further, the server virtual machine in the second processor 175b can transmit the processed data to the guest virtual machine.

Accordingly, of the guest virtual machine and the server virtual machine in the second processor 175b, only the server virtual machine can receive communication data and external input data and perform signal processing, such that signal processing load of the guest virtual machine VIMd can be reduced and 1:N data communication can be achieved, thereby achieving synchronization at the time of data sharing.

Meanwhile, the server virtual machine in the second processor 175b can be configured to set a shared memory 508b (FIG. 8) based on the hypervisor 505 in order to transmit the same data to the guest virtual machine.

That is, the server virtual machine in the second processor 175b can transmit the same data to the guest virtual machine in a synchronized state using the shared memory 508b based on the hypervisor 505. Accordingly, the plurality of displays 180c and 180d in the vehicle can display the same images in a synchronized state.

Meanwhile, the second signal processing device 170b can process various signals, such as an audio signal, an image signal, and a data signal. To this end, the second signal processing device 170b can be implemented in the form of a system on chip (SOC).

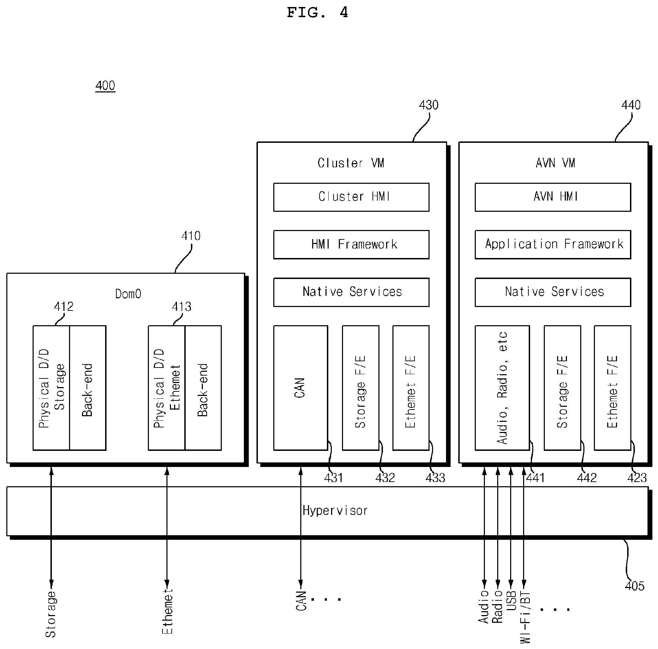

FIG. 4 is a view showing a system executed in a signal processing device related to the present disclosure.

Referring to the figure, FIG. 4 is a view illustrating that virtual machines are used for the cluster display 180a and the AVN display 180b.

The system 400 executed in the signal processing device of FIG. 4 illustrates that a cluster virtual machine 430 and an AVN virtual machine 440 are executed on a hypervisor 405 in the processor 175 in the signal processing device 170.

Meanwhile, the system 400 executed in the signal processing device of FIG. 4 illustrates that a legacy virtual machine 410 is also executed on the hypervisor 405 in the processor 175.

The legacy virtual machine 410 can include an interface 412 for data communication with the memory 140 and an interface 413 for Ethernet communication.

Meanwhile, the cluster virtual machine 430 can include an interface 431 for CAN communication, an interface 432 for communication with the interface 412 of the legacy virtual machine 410, and an interface 433 for communication with the interface 413 of the legacy virtual machine 410.

Meanwhile, the AVN virtual machine 440 can include an interface 441 for input and output of audio data, radio data, USB data, and wireless communication data, an interface 442 for communication with the interface 412 of the legacy virtual machine 410, and an interface 443 for communication with the interface 413 of the legacy virtual machine 410.

In the system 400, there is a disadvantage in that CAN communication data are input and output only in the cluster virtual machine 430, whereby the CAN communication data cannot be utilized in the AVN virtual machine 440.

Also, in the system 400 of FIG. 4, there is a disadvantage in that audio data, radio data, USB data, and wireless communication data are input and output only in the AVN virtual machine 440, whereby these data cannot be utilized in the cluster virtual machine 430.

Meanwhile, there is a disadvantage in that the cluster virtual machine 430 and the AVN virtual machine 440 are required to include the interfaces 431 and 432 and the interfaces 441 and 442, respectively, for memory data and Ethernet communication data input and output in the legacy virtual machine 410.

Therefore, the present disclosure proposes a scheme for improving the system of FIG. 4. That is, unlike FIG. 4, virtual machines are classified into a server virtual machine and guest virtual machines for inputting and outputting various memory data and communication data not in the guest virtual machines but in the server virtual machine. This will be described with reference to FIG. 5 and subsequent figures.

FIG. 5 is a view showing an example of a system executed in a signal processing device according to an embodiment of the present disclosure.

Referring to the figure, the system 500 of FIG. 5 illustrates that the server virtual machine 520, the first guest virtual machine 530, and the second guest virtual machine 540 are executed on the hypervisor 505 in the processor 175 of the signal processing device 170.

The first guest virtual machine 530 can be a virtual machine for the cluster display 180a, and the second guest virtual machine 540 can be a virtual machine for the AVN display 180b.

That is, the first guest virtual machine 530 and the second guest virtual machine 540 can be operated for image rendering of the cluster display 180a and the AVN display 180b, respectively.

Meanwhile, the system 50 executed in the signal processing device 170 of FIG. 5 illustrates that a legacy virtual machine 510 is also executed on the hypervisor 505 in the processor 175.

The legacy virtual machine 510 can include an interface 511 for data communication with the memory 140 and Ethernet communication.

Meanwhile, the legacy virtual machine 510 can further include a virtio-backend interface 512 for data communication with the first and second guest virtual machines 530 and 540.

The server virtual machine 520 can include an interface 521 for input and output of audio data, radio data, USB data, and wireless communication data and an input and output server interface 522 for data communication with the guest virtual machines.

That is, the server virtual machine 520 can provide inputs/outputs (I/O) difficult to virtualize with standard virtualization technology (VirtIO) to a plurality of guest virtual machines, such as the first and second guest virtual machines 530 and 540.

Meanwhile, the server virtual machine 520 can control radio data and audio data at a supervisor level, and can provide the data to a plurality of guest virtual machines, such as the first and second guest virtual machines 530 and 540.

Meanwhile, the server virtual machine 520 can process vehicle data, sensor data, and surroundings-of-vehicle information, and can provide the processed data or information to a plurality of guest virtual machines, such as the first and second guest virtual machines 530 and 540.

Meanwhile, the server virtual machine 520 can provide supervisory services, such as processing of vehicle data and audio routing management.

Next, the first guest virtual machine 530 can include an input and output client interface 532 for data communication with the server virtual machine 520 and APIs 533 configured to control the input and output client interface 532.

In addition, the first guest virtual machine 530 can include a virtio-backend interface for data communication with the legacy virtual machine 510.

The first guest virtual machine 530 can receive memory data by communication with the memory 140 and Ethernet data by Ethernet communication from the virtio-backend interface 512 of the legacy virtual machine 510 through the virtio-backend interface.

Next, the second guest virtual machine 540 can include an input and output client interface 542 for data communication with the server virtual machine 520 and APIs 543 configured to control the input and output client interface 542.

In addition, the second guest virtual machine 540 can include a virtio-backend interface for data communication with the legacy virtual machine 510.

The second guest virtual machine 540 can receive memory data by communication with the memory 140 and Ethernet data by Ethernet communication from the virtio-backend interface 512 of the legacy virtual machine 510 through the virtio-backend interface.

Meanwhile, the legacy virtual machine 510 can be provided in the server virtual machine 520, unlike FIG. 5.

In the system 500, CAN communication data are input and output only in the server virtual machine 520, but can be provided to a plurality of guest virtual machines, such as the first and second guest virtual machines 530 and 540, through data processing in the server virtual machine 520. Consequently, 1:N data communication by processing of the server virtual machine 520 can be achieved.

Also, in the system 500 of FIG. 5, audio data, radio data, USB data, and wireless communication data are input and output only in the server virtual machine 520, but can be provided to a plurality of guest virtual machines, such as the first and second guest virtual machines 530 and 540, through data processing in the server virtual machine 520. Consequently, 1:N data communication by processing of the server virtual machine 520 can be achieved.

Meanwhile, in the system 500 of FIG. 5, the first and second guest virtual machines 530 and 540 can be operated based on different operating systems.

For example, the first guest virtual machine 530 can be operated based on a Linux OS, and the second guest virtual machine 540 can be operated based on a Web OS.

In the server virtual machine 520, the shared memory 508 based on the hypervisor 505 can be set for data sharing, even though the first and second guest virtual machines 530 and 540 are operated based on different operating systems. Even though the first and second guest virtual machines 530 and 540 are operated based on different operating systems, therefore, the same data or the same images can be shared in a synchronized state. Eventually, the plurality of displays 180a and 180b can display the same data or the same images in a synchronized state.

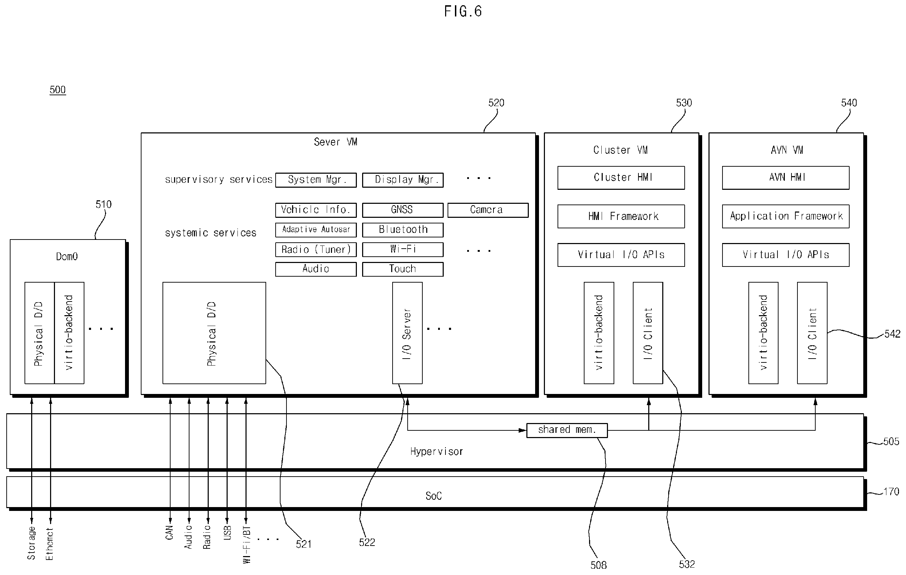

FIG. 6 is a view referred to in the description of operation of the system executed in the signal processing device according to the embodiment of the present disclosure.

Referring to the figure, the processor 175 in the signal processing device 170 executes the server virtual machine 520 and the first and second guest virtual machines 530 and 540 on the hypervisor 505 in the processor 175, and the server virtual machine 520 in the processor 175 is configured to set the shared memory 508 based on the hypervisor 505 for transmission of the same data to the first and second guest virtual machines 530 and 540.

For example, the same image data can be illustrated as the same data. Consequently, the plurality of displays 180a and 180b in the vehicle can display the same images in a synchronized state.

Meanwhile, in the system 500 of FIG. 6, the processor 175 in the signal processing device 170 executes the server virtual machine 520 and the first and second guest virtual machines 530 and 540 on the hypervisor 505 in the processor 175, and the server virtual machine 520 in the processor 175 can transmit the same data to the first and second guest virtual machines 530 and 540 in a synchronized state using the shared memory 508 based on the hypervisor 505.

For example, CAN communication data, audio data, radio data, USB data, wireless communication data, position information data, or touch data can be illustrated as the same data. Consequently, the plurality of displays 180a and 180b in the vehicle can display the same data in a synchronized state.

Meanwhile, although not shown in FIG. 6, the legacy virtual machine 510 can transmit memory data from the memory 140 and Ethernet data by Ethernet communication to the first and second guest virtual machines 530 and 540 in a synchronized state using the shared memory 508 based on the hypervisor 505. That is, it is possible to perform 1:N data communication with respect to the memory data or the Ethernet data, whereby it is possible to transmit the same data in a synchronized state.

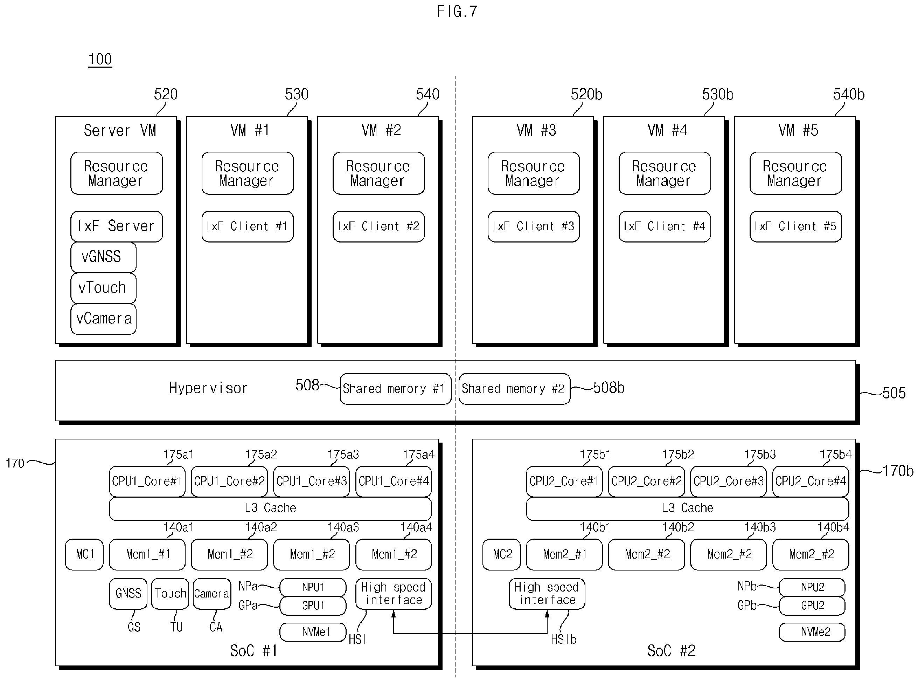

FIG. 7 is a diagram illustrating a vehicle display apparatus according to an embodiment of the present disclosure.

Referring to FIG. 7, a vehicle display apparatus 100 according to an embodiment of the present disclosure includes a signal processing device 170 including a processor 175 configured to perform signal processing, and a second signal processing device 170b including a second processor 175b configured to perform signal processing.

The signal processing device 170 performs signal processing for at least one of a first display 180a and a second display 180b in a vehicle 200.

The second signal processing device 170b performs signal processing for at least one of a third display 180c and a fourth display 180d in the vehicle 200.

Meanwhile, the processor 175 in the signal processing device 170 executes a server virtual machine 520 and at least one guest virtual machine 530 and 540.

In the drawing, an example is illustrated in which the processor 175 in the signal processing device 170 executes first and second guest virtual machines 530 and 540.

Meanwhile, the second processor 175b in the second signal processing device 170b executes at least one guest virtual machine 520b, 530b, and 540b.

In the drawing, an example is illustrated in which the second processor 175b in the second signal processing device 170b executes third to fifth guest virtual machines 520b, 530b, and 540b, but is not limited thereto, and can execute only the third and fourth guest virtual machines 520b and 530b.

Meanwhile, the processor 175 in the signal processing device 170 of the vehicle display apparatus 100 according to an embodiment of the present disclosure can execute the server virtual machine 520 and at least one guest virtual machine 530 and 540, and the second processor 175b in the second signal processing device 170b executes at least one guest virtual machine 520b, 530b, and 540b, without executing the server virtual machine.

Accordingly, the server virtual machine 520 in the signal processing device 170 can efficiently control at least one guest virtual machine 530 and 540 executed in the signal processing device 170, and at least one guest virtual machine 520b, 530b, and 540b executed in the second signal processing device 170b.

Accordingly, it is possible to increase transmission efficiency during data transmission between the plurality of signal processing devices 170 and 170b in the vehicle 200. In addition, it is possible to efficiently manage resources in the plurality of signal processing devices 170 for the plurality of displays in the vehicle 200.

Meanwhile, the server virtual machine 520 can include a resource manager for resource management, and an input and output server interface 522 for data communication with the guest virtual machines.

Meanwhile, each of the first to fifth guest virtual machines 530, 540, 520b, 530b, and 540b can include the resource manager for resource management, and input and output client interfaces 532, 542, 522b, 532b, and 542b for data communication with the server virtual machine 520.

Meanwhile, the signal processing device 170 can include a plurality of processor cores 175a1 to 175a4, a cache, a plurality of memories 140a1 to 140a4, a position information driver GS configured to receive or process position information data, a touch driver TU configured to receive or process touch input data, and a camera driver CA configured to receive or process camera image data.

Meanwhile, the signal processing device 170 can further include a neural network processor NPa for neural network processing, a graphics processor GPa for graphics processing, and a high-speed interface HSI for high-speed data transmission. In this case, the high-speed interface HSI can support PCIe, CCIX, or CXL.

Meanwhile, the second signal processing device 170b can include a plurality of processor cores 175b1 to 175b4, a cache, and a plurality of memories 140b1 to 140b4.

Meanwhile, the second signal processing device 170b can further include a neural network processor NPb for neural network processing, a graphics processor GPb for graphics processing, and a high-speed interface HSIb for high-speed data transmission. In this case, the high-speed interface HSIb can support PCIe, CCIX, or CXL.

Meanwhile, the server virtual machine 520 can control the guest virtual machine 530 executed in the processor 175, and guest virtual machines 520b, 530b, and 540b executed in the second processor 175b. Accordingly, it is possible to efficiently manage resources in the plurality of signal processing devices 170 for the plurality of displays in the vehicle 200.

Meanwhile, the server virtual machine 520 can receive and process wheel speed sensor data, position information data, camera image data, or touch input data of the vehicle 200, and can transmit the processed wheel speed sensor data, position information data, camera image data, or touch input data of the vehicle 200 to the client interfaces 532 and 542 in at least one guest virtual machine 530 and 540 in the processor 175 through the server interface 522b. Accordingly, it is possible to increase transmission efficiency during data transmission between the plurality of virtual machines 520, 530, and 540 in the signal processing devices 170.

Meanwhile, the signal processing device 170 and the second signal processing device 170b can execute the same hypervisor. Accordingly, it is possible to efficiently manage resources in the plurality of signal processing devices 170 for the plurality of displays in the vehicle 200.

Meanwhile, the server virtual machine 520 can write the wheel speed sensor data, position information data, camera image data, or touch input data of the vehicle 200 in a first shared memory 508 of the signal processing device 170, and the guest virtual machine 530 in the signal processing device 170 can read the wheel speed sensor data, position information data, camera image data, or touch input data of the vehicle 200 written in the first shared memory 508. Accordingly, it is possible to increase transmission efficiency during data transmission between the plurality of virtual machines 520 and 530 in the signal processing devices 170.

Meanwhile, the server virtual machine 520 can receive and process the wheel speed sensor data, position information data, camera image data, or touch input data of the vehicle 200, and can transmit the processed wheel speed sensor data, position information data, camera image data, or touch input data of the vehicle 200 to at least one guest virtual machine 520b, 530b, and 540b in the second signal processing devices 170b through the high-speed interfaces HIS and HSIb. Accordingly, it is possible to increase transmission efficiency during data transmission between the plurality of signal processing devices 170 and 170b in the vehicle 200.

Meanwhile, the server virtual machine 520 can write the wheel speed sensor data, position information data, camera image data, or touch input data of the vehicle 200 in a second shared memory 508b of the signal processing device 170, and at least one guest virtual machine 520b, 530b, and 540b in the second signal processing device 170b can read the wheel speed sensor data, position information data, camera image data, or touch input data of the vehicle 200 written in the second shared memory 508b. Accordingly, it is possible to increase transmission efficiency during data transmission between the plurality of the signal processing devices 170 and 170b in the vehicle 200.

Meanwhile, the server virtual machine 520 can write the wheel speed sensor data, position information data, camera image data, or touch input data of the vehicle 200 in the first shared memory 508 of the signal processing device 170, and in the case in which the first shared memory 508 in the signal processing device 170 and the second shared memory 508b in the second signal processing device 170b are coupled to each other, the guest virtual machine 530 in the signal processing device 170 can read the wheel speed sensor data, position information data, camera image data, or touch input data of the vehicle 200 through the second shared memory 508b coupled to the first shared memory 508.

That is, the signal processing device 170 and the second signal processing device 170b can transmit or receive data using the coupled shared memory 508. Accordingly, it is possible to increase transmission efficiency during data transmission between the plurality of signal processing devices 170 and 170b in the vehicle 200.

FIGS. 8A and 8B are diagrams illustrating various examples of data transmission between a plurality of signal processing devices associated with the present disclosure.

First, FIG. 8A is a diagram illustrating a vehicle display apparatus 100x including a plurality of signal processing devices 170x and 170bx associated with the present disclosure.

Referring to FIG. 8A, high-speed Ethernet communication is performed between the plurality of signal processing devices 170x and 170bx.

Meanwhile, each of the plurality of signal processing devices 170x and 170bx requires an Ethernet controller ECa and ECb and requires a network switch NSa between the Ethernet controllers ECa and ECb, for data transmission between the plurality of signal processing devices 170x and 170bx.

Meanwhile, each of the plurality of signal processing devices 170x and 170bx includes an Ethernet device driver EDa and EDb, a socket application program interface SOa and SOb, and middleware MAa and MAb.

As illustrated in FIG. 8A, a communication function is implemented using Portable Operating System Interface (POSIX) Application Program Interfaces (APIs), and thus is highly portable to other systems when considering only the communication function itself.

However, middleware or framework needs to be significantly modified in order to send and use data for a specific purpose. Further, it is required to implement dedicated protocols at the application level in order to implement a specific usage scenario.

For example, in order to transmit frame-data, generated by a service or application in the signal processing device 170x, to the second signal processing device 170bx and to output the data to a display device connected to the second signal processing device 170bx, a separate service suitable for this function is required, or middleware or framework for processing graphic data needs to be significantly modified.

In this case, efficiency decreases, and the service or application function that generates the frame-data in the signal processing device 170x is changed, such that a part that receives and outputs the data in the second signal processing device 170bx also needs to be changed, thereby reducing portability to other systems.

Next, FIG. 8B is a diagram illustrating another example of a vehicle display apparatus 100y including a plurality of signal processing devices 170x and 170bx associated with the present disclosure.

Referring to FIG. 8B, the plurality of signal processing devices 170x and 170bx are directly connected via high-speed data bus to perform communication therebetween.

Meanwhile, for data communication between the plurality of signal processing devices 170x and 170bx, each of the signal processing devices 170x and 170bx includes a bus driver BDa and BDb, a communication driver PCa and PCb, an application program interface PAa and PAb, and middleware MAa and MAb.

As illustrated in FIG. 8B, in order to control peripheral devices and to acquire or transmit data, it is required to implement an algorithm for controlling the peripheral devices according to a data transmitting and receiving method. In this case, the method of transmitting data is performed based on the bus driver BDa and BDb provided in a kernel.

For this reason, a control algorithm is not implemented by only using the bus drivers BDa and BDb, such that communication cannot be performed between the plurality of signal processing devices 170x and 170bx, and the communication drivers PCa and PCb need to be implemented separately based on the bus drivers BDa and BDb.

In this case, the communication drivers PCa and PCb operate based on dedicated communication protocols, such that if the signal processing device 170 and the second signal processing device 170b are produced by different manufacturers, communication cannot be established therebetween.

In addition, there is a drawback in that communication is performed using the dedicated communication drivers PCa and PCb, such that middleware, framework, or application needs to be executed based on the dedicated communication drivers PCa and PCb, thereby significantly degrading efficiency and portability.

Further, there is also a drawback in that when transmitting and receiving data for a specific function, middleware or framework needs to be significantly modified in order to implement the function.

For example, in order to transmit the frame-data, generated by a service or application in the signal processing device 170x, to the second signal processing device 170bx and to output the data to a display device connected to the second signal processing device 170bx, middleware or framework needs to be significantly modified to recognize and use the dedicated communication drivers PCa and PCb, and the service or application executed on the communication drivers PCa and PCb is also required to be modified, thereby making it impossible to be portable to other systems.

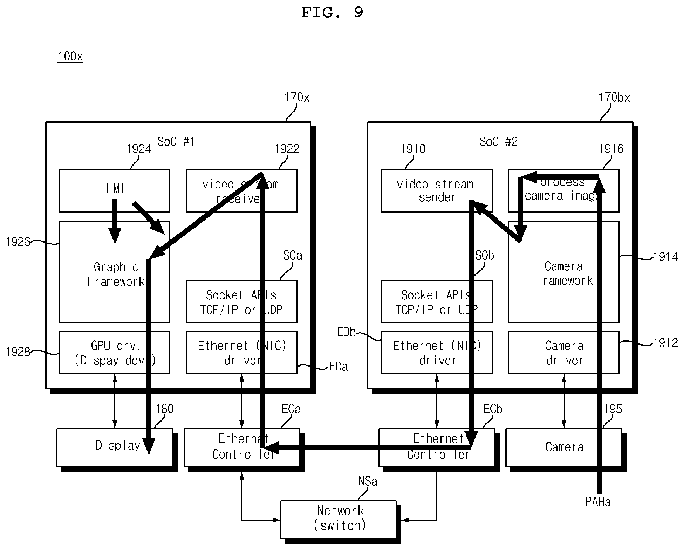

FIG. 9 is a diagram referred to in the description of data transmission between a plurality of signal processing devices associated with the present disclosure.

Referring to FIG. 9, in a vehicle display apparatus 100x including a plurality of signal processing devices 170x and 170bx associated with the present disclosure, high-speed Ethernet communication is performed between the plurality of signal processing devices 170x and 170bx.

Meanwhile, for data communication between the plurality of signal processing devices 170x and 170bx, each of the plurality of signal processing devices 170x and 170bx requires an Ethernet controller ECa and ECb and a network switch NSa between the Ethernet controllers ECa and ECb.

Meanwhile, each of the signal processing devices 170x and 170bx includes an Ethernet device driver EDa and EDb, a socket application program interface SOa and SOb, and middleware MAa and MAb.

In the case in which the camera device 195 is connected to the second signal processing device 170bx, camera data from the camera device 195 is output via a camera driver 1912, a camera framework 1914, a camera data processor 1916, a stream sender 1910, a socket application program interface SOb, an Ethernet device driver EDb.

Further, camera data output from the second signal processing device 170bx is input to the signal processing device 170x via a second Ethernet controller ECb and the first Ethernet controller ECa.

The camera data input to the signal processing device 170x is output to the display 180 via an Ethernet device driver EDa, a socket application program interface SOa, a stream receiver 1922, a graphic framework 1926, and a display driver 1928.

Meanwhile, when an input signal is received from an input device 110, an input signal from an input interface 1924 in the signal processing device 170x can be transmitted to the graphic framework 1926 and the like.

Referring to a transmission path of camera data in FIG. 9, data is transmitted via a significant number of internal blocks and the like between the plurality of signal processing devices 170x and 170bx, thereby complicating and delaying the transmission of the camera data. In addition, there is also a problem in that it is required to add a separate communication protocol to transmit another data, in addition to the camera data.

Accordingly, the present disclosure proposes a method of efficiently perform data transmission between a plurality of signal processing devices in a vehicle.

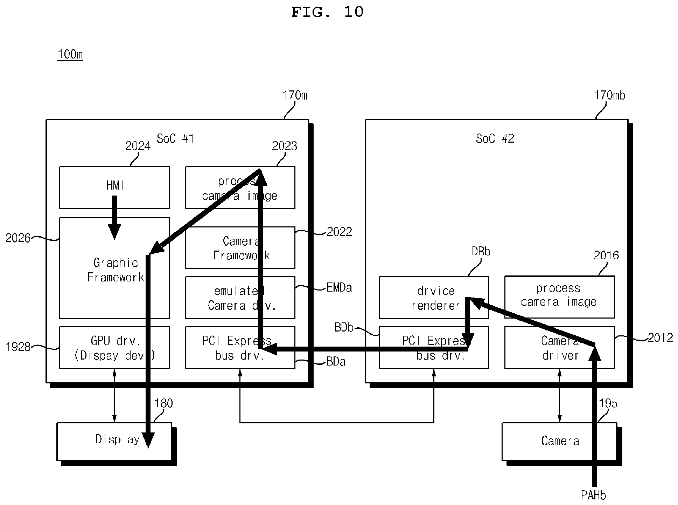

Specifically, the present disclosure proposes a method of configuring a driver that emulates a peripheral device, instead of using separate Ethernet controllers ECa and ECb and the like as illustrated in FIG. 9 and the like, in the case in which communication between a plurality of signal processing devices 170m and 170mb is performed via high-speed data bus. In this method, communication can be performed by only adding a device without modifying middleware, framework, or system service code, which will be described below with reference to FIG. 10 and subsequent figures.

FIG. 10 is a diagram illustrating data transmission between a plurality of signal processing devices according to an embodiment of the present disclosure.

Referring to FIG. 10, a vehicle display apparatus 100m according to an embodiment of the present disclosure includes a plurality of signal processing devices 170m and 170mb.

The signal processing device 170m according to an embodiment of the present disclosure includes: an interface BDa configured to exchange data with a second signal processing device 170mb connected to a first device; a virtual device driver EMDa which is emulated to receive data from the first device; and a display driver 1928 configured to output image data to a vehicle display based on data from the virtual device driver EMDa. Accordingly, it is possible to efficiently perform data transmission between the plurality of signal processing devices 170m and 170mb in a vehicle. In addition, it is possible to dispense with adding a communication protocol during data transmission between the plurality of signal processing devices 170m and 170mb in a vehicle.

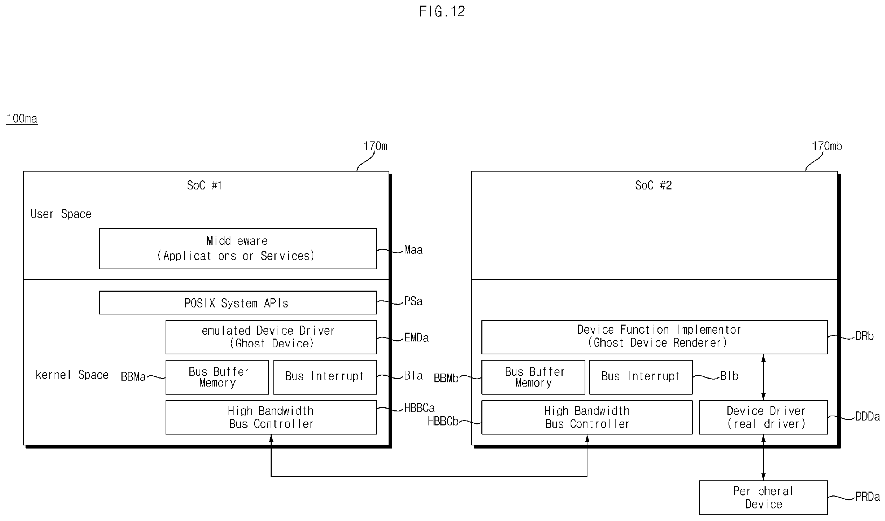

Meanwhile, the interface BDa can include a high-speed bus driver HBBCa (see FIG. 12) configured to exchange data via a high-speed data bus channel. For example, the high-speed bus driver HBBCa can be PCI Express bus driver. Accordingly, it is possible to efficiently perform data transmission between the plurality of signal processing devices 170m and 170mb in a vehicle.

Meanwhile, the second signal processing device 170mb according to an embodiment of the present disclosure includes: a device driver 2012 connected by wire or wirelessly to a first device to receive data from the first device; a device renderer DRb configured to perform rendering based on the data from the device driver 2012; and a second interface BDb configured to perform communication with an interface BDa of the signal processing device 170m.

Meanwhile, the interface BDa can receive data via the device driver 2012, the device renderer DRb, and the second interface BDb in the second signal processing device 170mb. Accordingly, it is possible to efficiently perform data transmission between the plurality of signal processing devices 170m and 170mb in a vehicle.

Meanwhile, the interface BDa can receive data which is abstracted in kernel space. Accordingly, data can be abstracted in kernel space during data transmission between the plurality of signal processing devices 170m and 170mb in a vehicle, and data is not required to be modified in the middleware or framework. In addition, it is possible to dispense with adding a communication protocol during data transmission between the plurality of signal processing devices 170m and 170mb in a vehicle.

Meanwhile, the interface BDa and the virtual device driver EMDa can operate based on the kernel space. Accordingly, data can be abstracted in kernel space during data transmission between the plurality of signal processing devices 170m and 170mb in a vehicle, and data is not required to be modified in the middleware or framework. In addition, it is possible to dispense with adding a communication protocol during data transmission between the plurality of signal processing devices 170m and 170mb in a vehicle.

Meanwhile, the first device can include a camera 195, a lidar sensor, a radar sensor, or a sensor device. Accordingly, data from various devices can be transmitted between the plurality of signal processing devices 170m and 170mb in a vehicle.

In the drawing, the camera 195 is used as an example of the first device, such that the following description will be given based on the camera 195.

When the camera device 195 is connected to the second signal processing device 170mb, camera data from the camera device 195 is output via the camera device driver 2012, the camera device renderer DRb, and the second interface BDb in the second signal processing device 170mb.

Further, the camera data output from the second signal processing device 170mb is input to the signal processing device 170m and is output to the display 180 via the interface BDa, the virtual device driver EMDa, the camera framework 2022, the image processor 2023, the graphic framework 2026, and the display driver 1928.

Meanwhile, when an input signal is received from the input device 110, an input signal from the input interface 2024 in the signal processing device 170m can be transmitted to the graphic framework 2026 and the like.

In comparison with the transmission path of the camera data of FIG. 9 with a transmission path of the camera data of FIG. 10, a separate communication controller outside the plurality of signal processing devices 170m and 170mb is omitted, and a path between the plurality of signal processing devices 170m and 170mb is reduced, thereby enabling rapid and simple transmission of the camera data. In addition, even transmission of other data in addition to the camera data is performed based on a predetermined communication protocol, thereby requiring no separate communication protocol.

In addition, in the transmission path of the camera data of FIG. 10, video stream data transmitted from the second signal processing device 170mb is abstracted into a virtual camera device at a kernel level by the virtual device driver EMDa such that no additional protocol definition is required, and it is not required to modify the camera framework 2022, the image processor 2023, the graphic framework 2026, and the display driver 1928 which are middleware for processing the transmitted video stream.

Meanwhile, for load distribution during data processing, an image processing operation performed by the image processor 2023 for processing the camera data can also be performed by the image processor 2016 in the second signal processing device 170mb, instead of the signal processing device 170m. Accordingly, load can be properly distributed when designing the overall system.

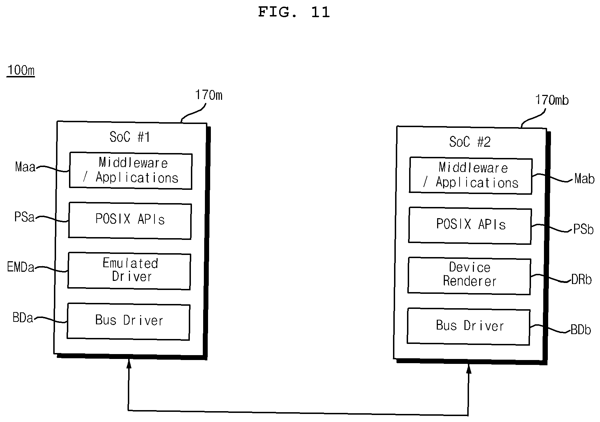

FIGS. 11 to 22 are diagrams referred to in the description of FIG. 10.

FIG. 11 is a diagram illustrating an example of operation between the signal processing device 170m and the second signal processing device 170mb.

Referring to FIG. 11, the signal processing device 170m can include or execute an interface BDa, a virtual device driver EMDa that is emulated to receive data, Portable Operating System Interface (POSIX) APIs PSa, and middleware Maa.

The second signal processing device 170mb can include or execute a second interface BDb, a device renderer DRb, POSIX APIs PSb, and middleware Mab.

In the case in which the plurality of signal processing devices 170m and 170mb are connected via high-speed data bus, data communication can be performed using the device renderer DRb of the second signal processing device 170mb and the emulated virtual device driver EMDa of the signal processing device 170m, without modifying the code of framework or system service.

For example, in the case in which an application executed in the second signal processing device 170mb generates a graphic interface screen and is to output the screen to the display 180 connected to the signal processing device 170m, the second signal processing device 170mb can treat the signal processing device 170m as a graphic output device.

Meanwhile, if a driver is implemented to emulate a communication driver with the second signal processing device 170mb which is to be implemented in the signal processing device 170m, it is considered that another graphic input device is added to the graphic framework executed on the signal processing device 170m.

This can be done by adding an emulated graphic input device to a configuration file without modifying the code of the graphic framework.

Meanwhile, the second signal processing device 170mb can generate a code so that graphic data from the signal processing device 170m can be output to a device connected to the second signal processing device 170mb.

The second signal processing device 170mb, which is to output the graphic data to the display 180, can directly communicate with the virtual device driver EMDa for transmission of the received data in the kernel space, thereby requiring no code modification beyond middleware or framework.

As described above, data is abstracted at the kernel level by emulating a peripheral device suitable for the type and purpose of use of data, a desired purpose can be easily achieved without requiring code modification of services, applications, middleware, or framework operating in the user space, etc., and high system portability can be achieved. Further, an additional protocol for communication between the signal processing devices 170m is not required to be written in user space code.

FIG. 12 is a diagram illustrating another example of operation between the signal processing device 170m and the second signal processing device 170mb.

Referring to FIG. 12, the signal processing device 170m can include or execute a high-speed bus driver HBBCa as an example of the interface BDa, a bus buffer memory BBMa, a bus interrupt BIa, a virtual device driver EMDa that is emulated to receive data, POSIX APIs PSa, and middleware Maa.

The high-speed bus driver HBBCa, the bus buffer memory BBMa, the bus interrupt BIa, the virtual device driver EMDa, and the POSIX APIs PSa are operated or executed in the kernel space, and the middleware Maa can be operated or executed in the user space.

The second signal processing device 170mb can include or execute a high-speed bus driver HBBCb as an example of the second interface BDb, a bus buffer memory BBMb, a bus interrupt BIb, a device renderer DRb, and a device driver DDDa for receiving data from a first device PRDa which is a real physical device.

The bus driver HBBCb, the bus buffer memory BBMb, the bus interrupt BIb, the device renderer DRb, and the device driver DDDa can be operated or executed in the kernel space.

The middleware, application, or service of the signal processing device 170m performs functions by the emulated virtual device driver EMDa, assuming that a virtual peripheral device, emulated by the second signal processing device 170mb, is connected thereto.

Meanwhile, the middleware Maa of the signal processing device 170m can access the emulated virtual device driver EMDa through the POSIX APIs PSa.

Meanwhile, the emulated virtual device driver EMDa can exchange data with the second signal processing device 170mb based on the buffer and interrupt of the high-speed data bus.

Meanwhile, a physical function of an emulated device can be implemented in code by the device renderer DRb implemented in the second signal processing device 170mb.

In this manner, a virtual device can be emulated by the signal processing device 170m even when the first device PRDa, which is the real physical device, is not present in the signal processing device 170mb.

If the function of the first device PRDa, which is the real physical device connected to the second signal processing device 170mb, is to be used by the signal processing device 170m, the device renderer DRb performs a function requested by the virtual device driver EMDa of the connected device, and can transmit the result and data to the signal processing device 170m, thereby performing an operation on the assumption that the first device PRDa is connected to the signal processing device 170m.

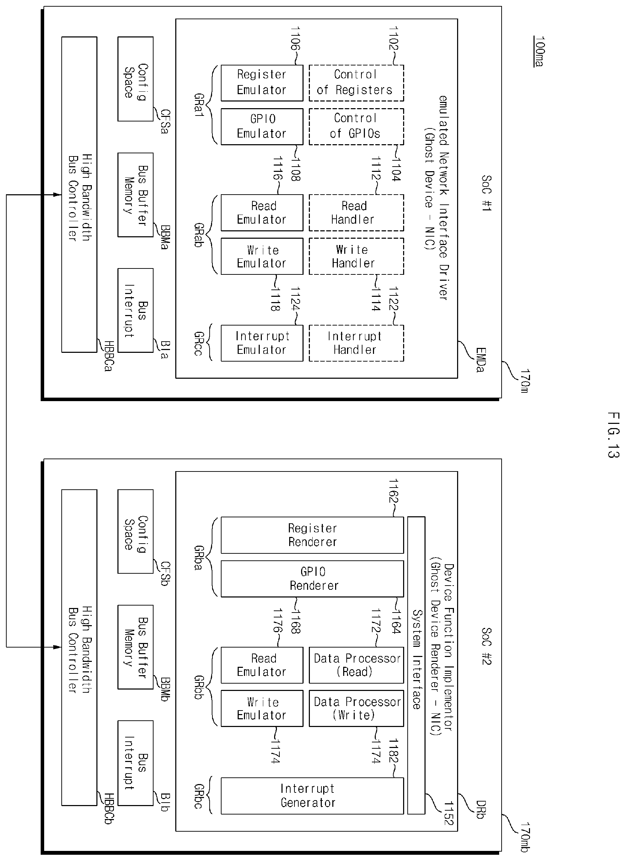

Meanwhile, the virtual device driver EMDa can control register and data buffer, and can receive an interrupt, which will be described below with reference to FIG. 13 and subsequent figures.

FIG. 13 is an exemplary block diagram of the virtual device driver EMDa and the device renderer DRb of FIG. 12.

Referring to FIG. 13, the signal processing device 170m can include or execute a high-speed bus driver HBBCa, a bus buffer memory BBMa, a bus interrupt BIa, a config space CFSa, and a virtual device driver EMDa.

The second signal processing device 170mb can include or execute a high-speed bus driver HBBCb, a bus buffer memory BBMb, a bus interrupt BIb, a config space CFSb, and a device renderer DRb.

The virtual device driver EMDa can include or execute a portion GRa1 corresponding to the config space CFSa, a portion GRab corresponding to the bus buffer memory BBMa, and a portion GRcc corresponding to the bus interrupt BIa.

The portion GRa1 corresponding to the config space CFSa can include a register emulator 1106, a GPIO emulator 1108, a register controller 1102, and a GPIO controller 1104.

The portion GRab corresponding to the bus buffer memory BBMa can include a read emulator 1106, a write emulator 1118, a read handler 1112, and a write handler 1114.

The portion GRcc corresponding to the bus interrupt BIa can include an interrupt emulator 1124 and an interrupt handler 1122.

The device renderer DRb can include or execute a portion GRba corresponding to the config space CFSb, a portion GRbb corresponding to the bus buffer memory BBMb, a portion GRbc corresponding to the bus interrupt BIb, and a system interface 1152.

The portion GRba corresponding to the config space CFSb can include a register renderer 1162 and a GPIO renderer 1168.

The portion GRbb corresponding to the bus buffer memory BBMb can include a read emulator 1176, a write emulator 1178, a read data processor 1172, and a write data processor 1174.

The portion GRbc corresponding to the bus interrupt BIb can include an interrupt generator 1182.

Meanwhile, in order to emulate a virtual device based on the signal processing device 170m, a virtual device driver EDa for a virtual device to be emulated is required to be implemented on the signal processing device 170m, and the device renderer DRb for performing an actual function is required to be implemented on the second signal processing device 170mb to which the real first device is connected.

In this manner, the second signal processing device 170mb can replace the first device, and middleware and service on the signal processing device 170m can perform an operation on the assumption that there is a desired peripheral device.

The virtual device driver EMDa for the real peripheral device can be divided into the following three portions: a portion GRa1 for controlling register of a peripheral device controller; a portion GRab for reading or writing data generated by a peripheral device through data buffer (FIFO) of the peripheral device controller; and a portion GRcc for receiving an interrupt generated by the peripheral device controller to recognize an event or state change that occurs in the peripheral device.

The portion GRa1 for controlling register of a peripheral device controller is a portion of the emulated virtual device driver EMDa that operates in the signal processing device 170m, and is a portion for reading or setting a register value of the real first device.

In addition, the portion GRa1 can include a portion for power control and resetting of the first device which is the physical device, based on GPIO of the signal processing device 170m.

In the case in which the first device is emulated by the second signal processing device 170mb, a control command for the portion is transmitted to the second signal processing device 170mb, and is emulated by the second signal processing device 170mb, a result thereof is required to be transmitted to the signal processing device 170m.

The portion GRa1 of the emulated virtual device driver EMDa that operates in the signal processing device 170m is emulated to perform an operation of reading or writing a register value so that the value can be transmitted to or read by a portion of the config space CFSa of the high-speed bus controller in the signal processing device 170m.

The portion GRba that operates in the second signal processing device 170mb properly processes the register value transmitted from the emulated virtual device driver EMDa of the signal processing device 170m, and sets a register value according to operation details and an execution result and transmits the result to the signal processing deice 170m. A portion that properly processes the register value and the operation details is referred to as the register renderer 1162, and a portion that properly processes and transmits GPIO details is referred to as the GPIO renderer 1168.

Meanwhile, data processed or generated by the existing first device connected to the high-speed data bus is stored in the FIFO memory area of the first device, and is transmitted to the signal processing device 170m via the high-speed data bus.

In the case where the first device is emulated by the second signal processing device 170mb directly connected to the high-speed data bus, data emulated by the second signal processing device 170mb is transmitted to a buffer memory of the high-speed data bus.

The virtual device driver EMDa can emulate a real device by treating the data as the FIFO of the first device.

That is, the read emulator 1106 or the write emulator 1118 emulates read or write of the virtual device driver EMDa to access the buffer of the high-speed data bus, and actual data can be processed and emulated by a read data processor 1172 and a write data processor 1174 which operate in the second signal processing device 170mb.

The read data processor 1172 and the write data processor 1174 can drive the real first device, connected to the second signal processing device 170mb, through a system interface 1152 and can fetch the result, if it is necessary to emulate the first device, and a function can be emulated via library or service executed in the kernel space or user space of the second signal processing device 170mb.

Meanwhile, if data in FIFO is prepared or if an event occurs which is required to be notified to the signal processing device 170m, the first device generates an interrupt through a physically connected wire, and the signal processing device 170m reads a specific register value to recognize the content of the generated interrupt.

Then, the virtual device driver EMDa emulates it based on an interrupt or event transferring structure of the high-speed data bus.

The content of the actual interrupt or event is processed by an interrupt generator 1182 that is executed on the second signal processing device 170mb. The interrupt generator 1182 can properly communicate, if necessary, with the read data processor 1172 or the write data processor 1174 or libraries or services, and generates and transmits an interrupt or event suitable for the function of a peripheral device.

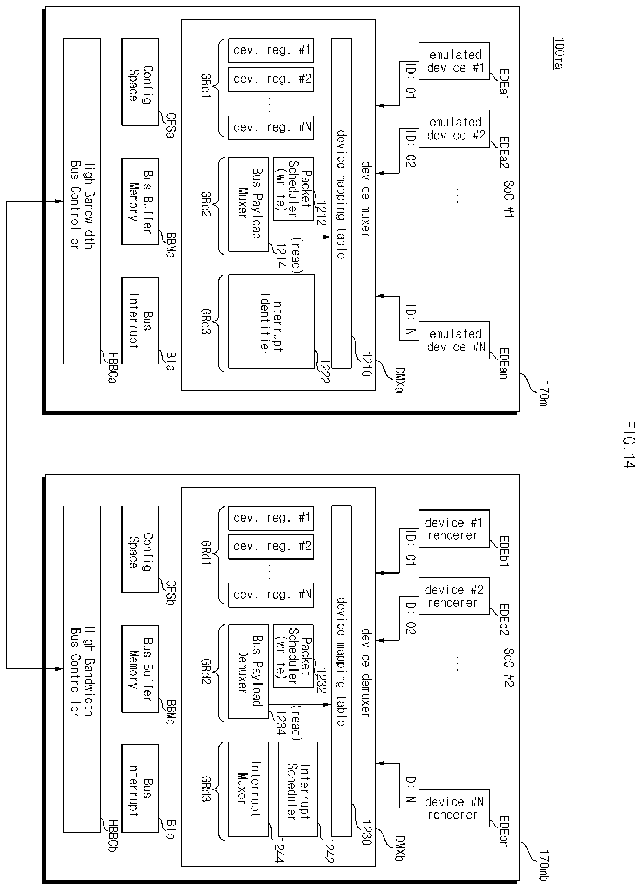

Meanwhile, data from each of a plurality of input devices can be transmitted between the plurality of signal processing devices 170m and 170mb, which will be described below with reference to FIG. 14.

FIG. 14 is a diagram illustrating a muxer in a signal processing device in a signal processing device and a demuxer in a second signal processing device.

Referring to FIG. 14, the signal processing device 170m can include or execute a high-speed bus driver HBBCa, a bus buffer memory BBMa, a bus interrupt BIa, a config space CFSa, and a device muxer DMXa.

The device muxer DMXa can mux data from each of a plurality of emulated devices EDa1 to EDan, and the high-speed bus driver HBBCa in the interface BDa can transmit the muxed data to the second signal processing device 170mb. Accordingly, data from the plurality of emulated devices EDa1 to EDan can be transmitted between the plurality of signal processing devices 170m and 170mb.

Meanwhile, the device muxer DMXa can be included in the virtual device driver EMDa in the signal processing device 170m.

Meanwhile, the device muxer DMXa can process the data from the plurality of emulated devices EDa1 to EDan based on priority. Accordingly, data from the plurality of emulated devices EDa1 to EDan can be transmitted between the plurality of signal processing devices 170m and 170mb.

Meanwhile, the muxed data output from the device muxer DMXa can be transmitted in packet form including a header containing ID information of the plurality of emulated devices EDa1 to EDan, and a payload containing a portion of the data from each of the plurality of devices. Accordingly, data from the plurality of emulated devices EDa1 to EDan can be transmitted between the plurality of signal processing devices 170m and 170mb.

In the drawing, an example is illustrated in which the device muxer DMXa includes a device mapping table 1210, a packet scheduler 1212, a bus payload muxer 1214, an interrupt identifier 1222.

The second signal processing device 170mb can include or execute a high-speed bus driver HBBCb, a bus buffer memory BBMb, a bus interrupt BIb, a config space CFSb, and a device demuxer DMXb.

The device demuxer DMXb can demux the muxed data received from the signal processing device 170m, and can match the data with a plurality of device renderers EDb1 to EDbn.

Meanwhile, the device demuxer DMXb can mux data from each of the plurality of device renderers EDb1 to EDbn, and the second high-speed bus driver HBBCb in the interface BDb can transmit the muxed data to the signal processing device 170m. Accordingly, data from the plurality of device renderers EDb1 to EDbn can be transmitted between the plurality of signal processing devices 170m and 170mb.

Meanwhile, the device demuxer DMXa can demux the muxed data received from the second signal processing device 170m.

Meanwhile, the signal processing device 170m can further include a demuxer DMXb configured to demux the muxed data received from the second signal processing device 170m. Further, the display driver 1928 can output image data to the vehicle display 180 based on the data from the demuxer DMXb in the signal processing device 170m. Accordingly, data from the plurality of devices can be transmitted between the plurality of signal processing devices 170m and 170mb.

In the drawing, an example is illustrated in which the device demuxer DMXb includes a device mapping table 1230, a packet scheduler 1232, a bus payload demuxer 1234, an interrupt identifier 1242, and an interrupt muxer 1244.

The plurality of emulated devices EDa1 to EDan operating simultaneously on one signal processing device 170m can transmit the emulated data separately to the second signal processing device 170mb via a single bus channel.

Accordingly, even when only a single high-speed data bus channel is physically connected between the plurality of signal processing devices 170m and 170mb, the plurality of emulated devices EDa1 to EDan can be emulated simultaneously via the data bus channel.

To this end, data from the plurality of emulated devices EDa1 to EDan can be transmitted in packet form to the second signal processing device 170mb, and each packet can be composed of a header and a payload.

The data transmitted in packet form from the plurality of emulated devices EDa1 to EDan can be mixed by the device muxer DMXa and transmitted, and can be separated by the device demuxer DMXb in the second signal processing device 170mb.

The plurality of emulated devices EDa1 to EDan preferably have unique ID information for distinguishing the devices. The ID information is defined in the header of the packet data standardized in packet form.

ID information of each of the plurality of emulated devices EDa1 to EDan and essential information based on the ID information can be recorded and stored as a pair in the device mapping table 1210.

The device mapping table 1210 needs to be located in both of the signal processing device 170m and the second signal processing device 170mb, and it is desirable that the same ID information is used for each device.

That is, it is required to use the same ID information which is referred to by the plurality of emulated devices EDa1 to EDan and the plurality of device renderers DRb for these devices, and the ID information desirably has a unique value within the whole system.

In order to emulate the register and GPIO of each of the plurality of emulated devices EDa1 to EDan, a system memory area has a configuration area designated for each of the emulated plurality of devices EDa1 to EDan. The area can be divided by the device mapping table 1210.

By changing a register value of the plurality of emulated devices EDa1 to EDan, a value in the memory area is changed by the device mapping table 1210, and the value can be transmitted to the connected second signal processing device 170mb by a mechanism for transmitting a set area value of the high-speed data bus.

The plurality of device renderers EDb1 to EDbn can detect that the value is changed by a mechanism for changing a set value of the high-speed data bus, and can read the value to perform a pre-defined operation. In this case, the plurality of device renderers EDb1 to EDbn to be operated can be separated by a mapping table.

In order to mix data from the plurality of emulated devices EDa1 to EDan that operate simultaneously and to transmit the mixed data to a single physical channel, it is desirable to prioritize the data according to the settings of the plurality of emulated devices EDa1 to EDan, so that the data can be sequentially processed even during a short time period.

The priority of each of the plurality of emulated devices EDa1 to EDan is recorded in the scheduler 1212, and a data mixing order can be determined according to priority when mixing the data.

In response to receiving a request for transmitting data from an emulated device having a high priority, the scheduler 1212 mixes high-priority data preferentially over low-priority data, such that the high-priority data can be first transmitted to the connected signal processing device 170m.

The data are already mixed according to priority during transmission, such that the second signal processing device 170mb on the receiving end can sequentially process the data according to the received priority. That is, only the write operation is performed by considering the priority, and the read operation can be sequentially performed.

In order to transmit data from the plurality of emulated devices EDa1 to EDan at the same time via a single high-speed data bus, it is required to mix data, which is standardized in packet form, according to a transmission standard of the high-speed data bus.

The consecutive data can be divided into a header and a payload, and the header stores unique ID information and essential information for each device.

The second signal processing device 170mb on the receiving end can separate and depacketize the information, and can distinguish the respective emulated devices EDa1 to EDan based on the information recorded in the header.

Priorities of various interrupts generated by the plurality of device renderers EDb1 to EDbn are adjusted by the interrupt scheduler 1242, and the interrupts can be mixed by the interrupt mixer 1244 so as to be transmitted via a single physical high-speed data bus.

The signal processing device 170m can sequentially separate the mixed interrupts according to priority, and can transmit the separated interrupts to each of the plurality of emulated devices EDa1 to EDan.

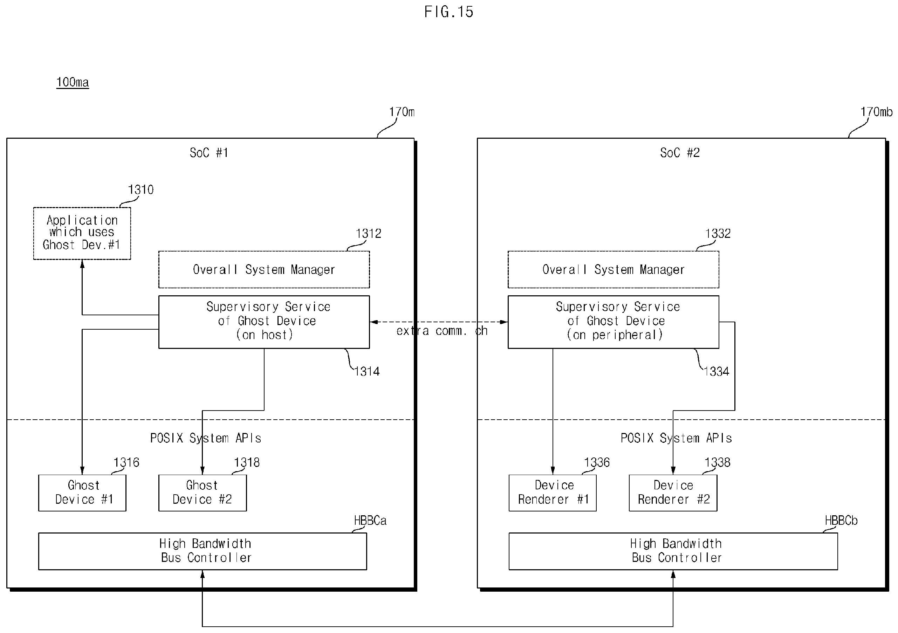

FIG. 15 is a diagram illustrating an example of flexibly changing and controlling the type of data, transmitted via a high-speed data bus, and abstraction model by using a separate communication channel between a plurality of signal processing devices.

Referring to FIG. 15, the signal processing device 170m can execute or include a virtual device driver 1316, a second virtual device driver 1318, a service manager 1314, a system manager 1312, a high-speed bus driver HBBCa, and a virtual application 1310.

The second signal processing device 170mb can execute or include a device renderer 1336, a second device renderer 1338, a service manager 1334, a system manager 1332, and a high-speed bus driver HBBCb.

The service manager 1314 can communicate with the second signal processing device 170mb based on a high-speed bus driver HBBCa which is an interface BDa, and a separate communication channel. In this case, the separate communication channel can be an Ethernet channel.

The service manager 1314 can change a Supervisory Service of the emulated virtual device, if it is required to change the role and type of the emulated virtual device.

To this end, the service manager 1314 can communicate with the service manager 1332 of the second signal processing device 170mb via a separate channel.

The service manager 1314 can receive an unload event for a first device from the service manager 1314 and the like.

The service manager 1314 can terminate communication with the device renderer 1336 in the second signal processing device 170mb and terminate communication with the high-speed bus driver HBBCa which is the interface BDa, based on the unload event for the first device.

Meanwhile, based on a load event for a second device connected to the second signal processing device 170mb, the service manager 1314 can communicate with the high-speed bus driver HBBCb and the second device renderer 1338 corresponding to the second device in the second signal processing device 170mb. Accordingly, data communication can be performed in response to a device change.

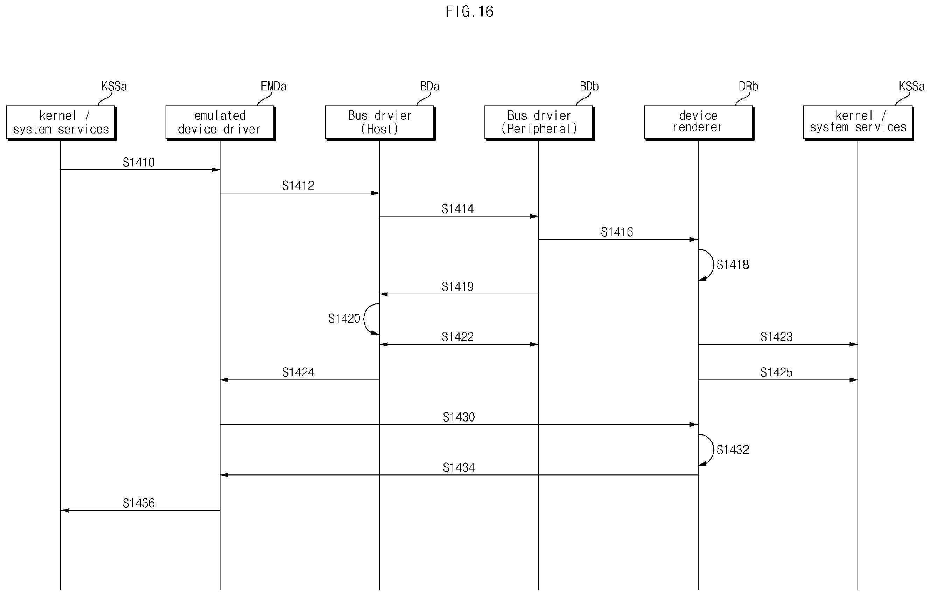

FIG. 16 is a flowchart illustrating an example of initialization between a signal processing device and a second signal processing device.

Referring to FIG. 16, a system service manager KSSa in the signal processing device 170m transmits system boot information to a virtual device driver EMDa (S1410).

Accordingly, the virtual device driver EMDa transmits an open bus command to the interface BDa (S1412).

In response thereto, the interface BDa transmits start information to the second interface BDb (S1414).

The second interface BDb transmits a preparation command to the device renderer DRb (S1416), and the device renderer DRb prepares a device function (S1418).

Then, the device renderer DRb transmits a request for system resources to the system service manager KSSb in the second signal processing device 170mb (S1423), and initializes a system function (S1425).

Meanwhile, after transmitting the preparation command, the second interface BDb transmits a reply command to the interface BDa (S1419), and the interface BDa performs an internal processing operation (S1420) and transmits processing completion information to the virtual device driver EMDa (S1424).

Meanwhile, the virtual device driver EMDa transmits a communication connection request to the device renderer DRb (S1430), and the device renderer DRb performs communication connection based on the communication connection request (S1432) and transmits communication channel information to the virtual device driver EMDa (S1434).

Accordingly, the virtual device driver EMDa can transmit device registration information to the system service manager KSSa (S1436).

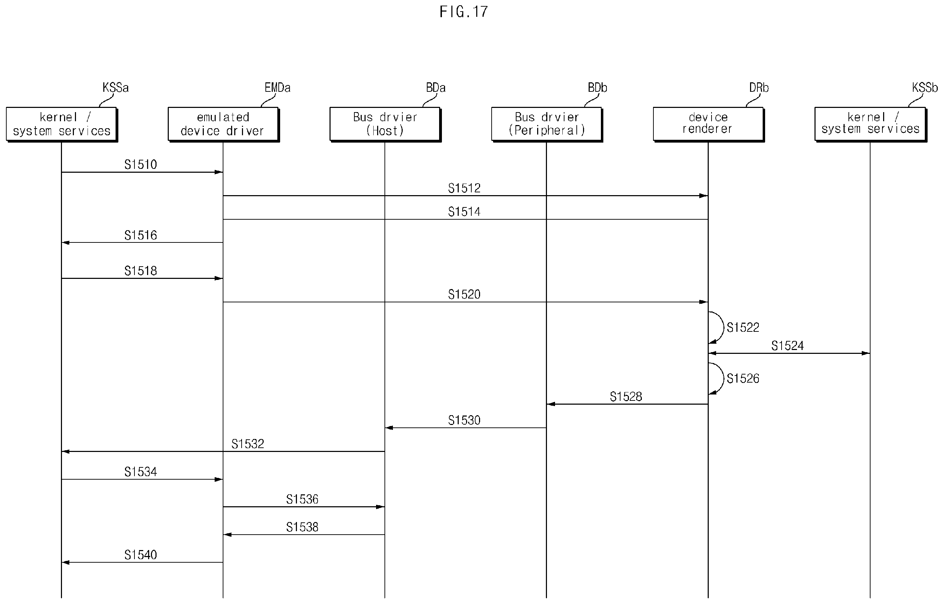

FIG. 17 is a flowchart illustrating an example of operation between a signal processing device and a second signal processing device.

Referring to FIG. 17, a system service manager KSSa in the signal processing device 170m transmits an open device command to a virtual device driver EMDa (S1510).

Accordingly, the virtual device driver EMDa transmits a state check command to the device renderer DRb (S1512).

In response thereto, the device renderer DRb transmits state information to the virtual device driver EMDa (S1514).

Then, the virtual device driver EMDa transmits success information or failure information to the system service manager KSSa (S1516).

Next, the system service manager KSSa transmits an operation request to the virtual device driver EMDa (S1518).

In response thereto, the virtual device driver EMDa transmits an operation command to the device renderer DRb (S1520).

The device renderer DRb performs function emulation based on the operation command (S1522) and processes data (S1524).

Further, the device renderer DRb transmits data to the second interface BDb (S1528), and the second interface BDb transmits data to the interface BDa (S1530).

The interface BDa transmits an interrupt to the system service manager KSSa (S1532), and the system service manager KSSa transmits a read command to the virtual device driver EMDa (S1534).

Accordingly, the virtual device driver EMDa performs reading from a buffer (S1536), and the interface BDa transmits reading completion information to the virtual device driver EMDa (S1538), and the virtual device driver EMDa copies the data, of which reading is completed, to the system service manager KSSa (S1540).

Accordingly, the signal processing device 170m can receive data from the second signal processing device 170mb connected to the first device, and can process the received data.

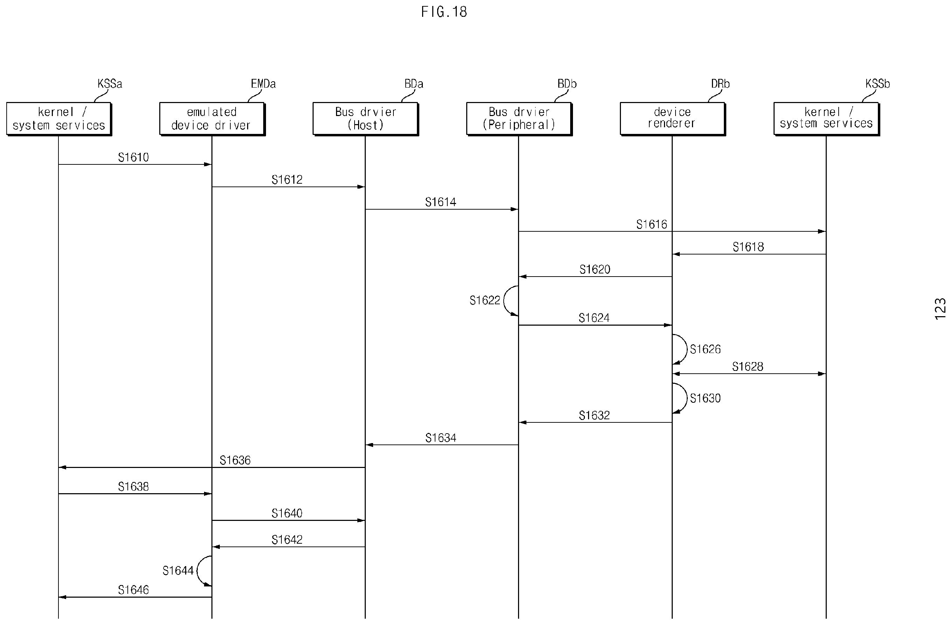

FIG. 18 is a flowchart illustrating another example of operation between a signal processing device and a second signal processing device.

Referring to FIG. 18, a system service manager KSSa in the signal processing device 170m transmits a data write command to a virtual device driver EMDa (S1610).

Accordingly, the virtual device driver EMDa writes data to the interface BDa (S1612).

Then, the interface BDa transmits data to the second interface BDb (S1614).

The second interface BDb transmits an interrupt to a system service manager KSSb (S1616), and the system service manager KSSb reads the interrupt from the device renderer DRb (S1618).

Then, the device renderer DRb performs reading from the second interface BDb (S1526) and transmits data from the second interface BDb to the device renderer DRb (S1624).

The device renderer DRb performs function emulation (S1626) and processes data (S1628).

Then, the device renderer DRb generates an event (S1630) and transmits the event to the second interface BDb (S1632).

The second interface BDb transmits an event to the interface BDa (S1634).

The interface BDa transmits the interrupt to the system service manager KSSa (S1636), and the system service manager KSSa transmits a read command to the virtual device driver EMDa (S1638).

Accordingly, the virtual device driver EMDa performs reading from a buffer (S1640), and the interface BDa transmits reading completion information to the virtual device driver EMDa (S1642), and the virtual device driver EMDa processes the event, of which reading is completed, and copies the event to the system service manager KSSa (S1646).

Accordingly, the signal processing device 170m can receive the event from the second signal processing device 170mb connected to the first device, and can process the received data.

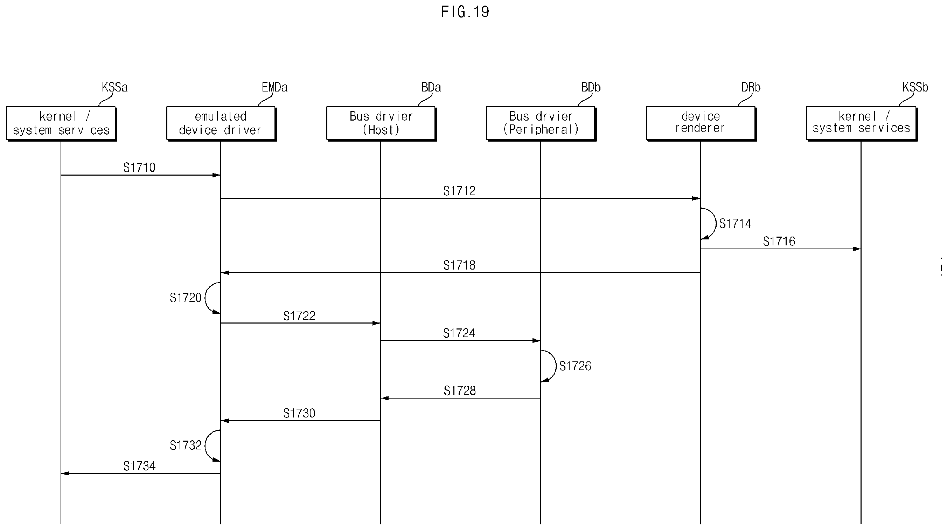

FIG. 19 is a flowchart illustrating an example of terminating communication between a signal processing device and a second signal processing device.

Referring to FIG. 19, a system service manager KSSa in the signal processing device 170m transmits a device termination command to the virtual device driver EMDa (S1710).

In response thereto, the virtual device driver EMDa transmits a communication channel termination command to the device renderer DRb (S1712).

Then, the device renderer DRb terminates the operation of the renderer (S1714) and returns resources to the system service manager KSSb (S1716).

The device renderer DRb transmits termination completion information to the virtual device driver EMDa (S1718), and the virtual device driver EMDa processes the termination completion information (S1720) and transmits bus termination information to the interface BDa (S1722).

Then, the interface BDa transmits a device removal command to the second interface BDb (S1724).

The second interface BDb removes the device (S1726) and transmits removal completion information to the interface BDa (S1728).

Then, the interface BDa transmits the removal completion information to the virtual device driver EMDa (S1730), and the virtual device driver EMDa returns resources (S1732).

Then, the virtual device driver EMDa transmits completion information to the system service manager KSSa (S1734).

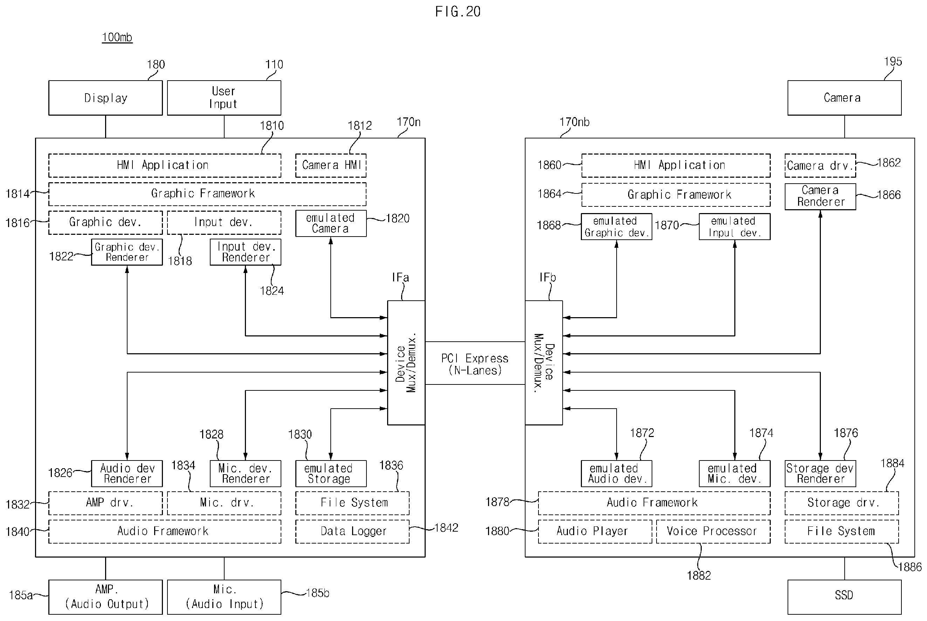

FIG. 20 is an exemplary internal block diagram of a vehicle display apparatus 100mb according to another embodiment of the present disclosure.

Referring to FIG. 20, a signal processing device 170n according to another embodiment of the present disclosure includes: an interface IFa configured to exchange data with a second signal processing device 170nb connected to a camera device 195; a virtual device driver 1820 which is emulated to receive data from the camera device 195; a graphic driver 1816 configured to output image data to a vehicle display based on data from the virtual device driver 1820; and a graphic renderer 1822 configured to perform rendering on the data of the display 180.

The interface IFa transmits data from the graphic renderer 1822 to the second signal processing device 170nb. Accordingly, it is possible to efficiently perform data transmission between the plurality of signal processing devices 170n and 170nb in a vehicle. In addition, it is possible to dispense with adding a communication protocol during data transmission between the plurality of signal processing devices 170n and 170nb in a vehicle.

Meanwhile, the signal processing device 170n can further include an input device renderer 1824 configured to perform rendering on data from the input device 110.

The interface IFa can further transmit data from the input device renderer 1824 to the second signal processing device 170nb.

Particularly, the data from the input device renderer 1824 can be transmitted to the second signal processing device 170nb through the interface IFa, such that data input by a user connected to the first signal processing device 170n can be transmitted to the second signal processing device 170nb, and the second signal processing device 170nb including no user input device can also receive a user input.

Accordingly, data from various devices can be transmitted between the plurality of signal processing devices 170n and 170nb in a vehicle.

Meanwhile, the signal processing device 170n can further include an application 1810 configured to process an input signal from the input device 110, a camera interface 1812, a graphic framework 1814, and an input device driver 1818.

Meanwhile, the signal processing device 170n can further include an audio output renderer 1826 configured to perform rendering on data from the audio output device 185a, and an audio input renderer 1828 configured to perform rendering on data from the audio input device 185b.

In this case, the interface IFa can transmit data from the audio output renderer 1826 or the audio input renderer 1828 to the second signal processing device 170nb. Accordingly, data from various devices can be transmitted between the plurality of signal processing devices 170n and 170nb in a vehicle.

Meanwhile, the signal processing device 170n can further include an audio framework 1840, an audio output device 1832, an audio input driver 1834, a file system manager 1836, a data logger 1842.

Meanwhile, the signal processing device 170n can further include an emulated storage driver 1830 which is emulated to receive data from a storage device SSD connected to the second signal processing device 170nb. Accordingly, data from various devices can be transmitted between the plurality of signal processing devices 170n and 170nb in a vehicle.

Meanwhile, the second signal processing device 170nb can include a camera renderer 1866 and a second interface IFb.

Meanwhile, the second signal processing device 170nb can further include a camera driver 1862, an application 1860 configured to process an input signal, a graphic framework 1864, an emulated graphic driver 1868, a virtual input device driver 1870, an emulated audio output driver 1872, an emulated audio input driver 1874, a storage device renderer 1876, a storage device driver 1884, an audio framework 1878, an audio player 1880, a voice processor 1882, and a file system manager 1866.

The plurality of signal processing devices 170n and 170nb can be directly connected via PCI Express bus. One side acts as an RC and the other side acts as an EP according to the PCI Express bus definition.

The number of lanes can be defined depending on the required bandwidth. For example, if a bandwidth of 16 Gbps is required, two lanes of PCI Express Gen3 can be required.

The muxer and demuxer in the respective interfaces IFa and IFb can be implemented in the kernel space, so as to emulate a plurality of devices based on the control code of a PCI Express Host controller and PCI Express framework of Linux kernel.

The muxer can group data, generated from a plurality of devices, into a PCI Express transmission packet, and can transmit the data to the outside.

The demuxer can separate packets for each device, and generates an event for transmission to corresponding devices.

Meanwhile, depending on a user scenario, a user graphic interface that operates on the signal processing device 170n can be output to the display 180 or a user graphic interface that operates on the second signal processing device 170nb can be selectively output to the display 180. Alternatively, two screens can be properly split or mixed to be displayed simultaneously on one monitor.

A user input, which is input by touching the screen or by a physical key device, can be input to the signal processing device 170n. In this case, user input event information, transmitted to the signal processing device 170n, is transmitted to the second signal processing device 170nb, and it is desirable that an application running on the second signal processing device 170nb changes a screen or controls an operation by properly processing the user input event information.

To this end, the virtual input device driver 1870 is implemented in the second signal processing device 170nb, and the input device renderer 1824 is implemented in the signal processing device 170n, so that the user input information received from the real input device 110 can be transmitted to the virtual input device driver 1870 of the second signal processing device 170nb.

The camera device 195 is connected to the second signal processing device 170nb.

It is required to emulate the camera device 195 in the signal processing device 170n in order to process the video stream data input from the camera device 195.

To this end, the camera driver 1820 emulated in the signal processing device 170n is implemented, and the video stream data is received from the camera renderer 1866 implemented in the second signal processing device 170nb.

The camera renderer 1866 of the second signal processing device 170nb can interwork with a driver of the camera device 195 to acquire video streams in real time and place the video streams onto the PCI Express bus to transmit the video streams to the signal processing device 170n.

The audio output device 185a is connected to the signal processing device 170n.

In order to play the audio output stream, generated by an application of the second signal processing device 170nb, to the audio output device 185a connected to the signal processing device 170n, it is required to implement the audio output driver 1872 emulated in the second signal processing device 170nb.

The audio data output from the emulated audio output driver 1872 is transmitted to the signal processing device 170n via the PCI Express bus, and the audio output renderer 1826 receives the audio data. By using the function of the emulated audio output driver 1872, the audio output renderer 1826 transmits the played stream to the real audio output device 185a, and the sound is played.

The audio input device 185b is connected to the signal processing device 170n.

In the case in which an application, running on the second signal processing device 170n, requires an audio input, it is required to implement the emulated audio input driver 1874 in the second signal processing device 170nb.

The audio framework 1878 of the second signal processing device 170nb is emulated as if a real audio input device 185b was installed therein, by the emulated audio input driver 1874.

The audio input renderer 1828 implemented in the signal processing device 170n receives a voice stream input from the audio input device 185b connected to the signal processing device 170n, and the audio input renderer 1828 transmits the voice stream to the emulated audio input driver 1874 of the second signal processing device 170nb.

Then, the application of the second signal processing device 170nb processes and controls the voice stream via the audio framework 1878 of the second signal processing device 170nb.

The storage device SSD is connected to the second signal processing device 170nb.

In order for the data storage process of the signal processing device 170n to directly store data in the device, emulation is required as if a storage device was included in the signal processing device 170n.

To this end, the file system manager 1836 of the signal processing device 170n is emulated as if the storage device was present, by the emulated storage driver 1830, and the data storage process of the signal processing device 170n reads and writes a file object based on standard applications program interface provided by the file system manager 1836.

A control command and data, transmitted from the file system manager 1836 of the signal processing device 170n, are transmitted to the second signal processing device 170nb by the emulated storage driver 1830. The transmitted control command and data are transmitted to the storage device SSD based on the storage device renderer 1876.

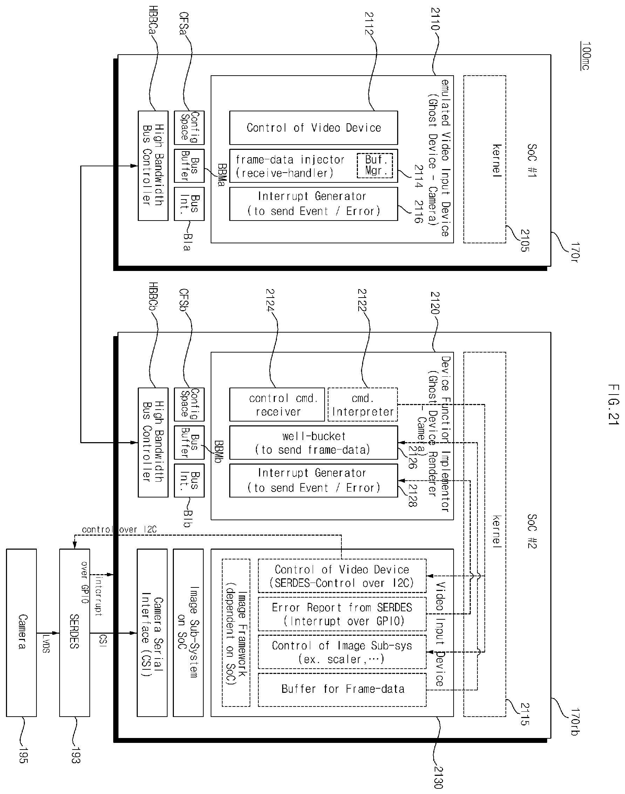

FIG. 21 is a diagram illustrating an example of transmitting a camera image stream, received by MIPI-CSI input, to another signal processing device via high-speed data bus.

Referring to FIG. 21, a signal processing device 170r in a vehicle display apparatus 100mc can include or execute a kernel 2105, a virtual device driver 2110, a high-speed bus driver HBBCa, a bus buffer memory BBMa, a bus interrupt BIa, and a config space CFSa.

The emulated virtual device driver 2110 can include a video device controller 2112, a frame data injector 2114, and an interrupt receiver 2116.

The second signal processing device 170rb can include or execute a high-speed bus driver HBBCb, a bus buffer memory BBMb, a bus interrupt BIb, a config space CFSb, a device renderer 2120, a video input device 2130, and a camera serial interface (CSI).

The second signal processing device 170rb generally includes the camera serial interface (CSI) to input camera data, and uses a Serial-Deserial (SERDES) driver 193 to convert the input Low Voltage Differential Signal using the CSI. The SERDES driver 193 is controlled via I2C bus, and an interrupt from the SERDES driver 193 is input through GPIO.

The camera data input through the CSI is subject to basic processing, such as color adjustment, image format conversion, scaling (scaler), etc., by an image sub-system for image processing in the second signal processing device 170rb, and then is located in a system memory.

The system framework controls a related module so that the camera data located in the system memory can be accessed by the graphic output device and can be finally output to the display 180.

In this case, the kernel treats the camera device 195 as a video input device 2130, and a framework related to processing graphics and camera data controls and processes a series of processes using a corresponding virtual device driver 2110.

In order to emulate the camera device 195 via high-speed data bus between the plurality of signal processing devices 170r and 170rb, the device renderer 2120 of the second signal processing device 170rb can include a control command receiver 2124, a command interpreter 2122, a camera data sender 2126, and an interrupt and event sender 2128.

In order to emulate the camera device 195 in the signal processing device 170r, the emulated virtual device driver 2110 can include a video device controller 2112, a video device controller 2112 for placing the received camera data on a system memory, and an interrupt receiver 2116 for receiving an event or an interrupt, and the like.

As the real camera device 195 is represented and functions via the virtual device driver 2110 in the kernel of the second signal processing device 170rb, the emulated video input virtual device driver 2110 can allow a function to be provided as if the real camera device 195 is physically connected in the kernel of the signal processing device 170r.

A control command for the video input device by the system on the signal processing device 170r is transmitted to the second signal processing device 170rb by the video device controller 2112. A mechanism for transmitting control command data via high-speed data bus between the signal processing devices 170r and 170rb is dependent on a transmission mechanism of the used high-speed data bus, and the data is transmitted using a config space of the high-speed data bus so that a small amount of data can be transmitted efficiently.

The control command transmitted to the second signal processing device 170rb is converted according to a camera driver implemented in the second signal processing device 170rb. The camera driver implemented in the second signal processing device 170rb is highly dependent on a camera used and a vendor of the second signal processing device 170rb, such that a control command analysis and conversion unit absorbs the change, so that the change of the device renderer 2120 can be minimized.

A command is properly processed by the control command analysis and conversion unit and is transmitted to a video input device via a standard control command format of the kernel (Portable Operating System Interface (or POSIX) Application Program Interface), and is used for controlling the SERDES via the I2C bus or for setting and controlling the image sub-system.

As described above, the camera data transmitted from the camera device 195 is transmitted to the system via the Low Voltage Differential Signal, and is converted into the form of CSI through the SERDES to be transmitted to the second signal processing device 170rb.

The transmitted camera data is transmitted to the ISP in the second signal processing device 170rb for preprocessing, and the processed camera data is located in a buffer memory area managed by the virtual device driver 2110.

When the camera data is prepared, a notification is called back to a module that opens the virtual device driver 2110, and the device renderer 2120 prepares for transmission to the signal processing device 170r.

The device renderer 2120 accesses the data buffer memory to transmit the camera data to the signal processing device 170r via the high-speed data bus.

The received camera data is located in a specific memory area by the virtual device driver 2110, and notifies a system module, which opens the virtual device driver 2110, that the data has been received.

An error or status of a video stream of consecutive camera data transmitted to the system via the Low Voltage Differential Signal is detected by the SERDES and is transmitted to the signal processing device 170r through the GPIO.

When an interrupt occurs through the GPIO, tasks required to be processed when the interrupt occurs are performed by an Interrupt Service Routine (ISR), and details of the interrupt or event can be checked via the I2C.

The interrupt or event processed by the second signal processing device 170rb is transmitted to the signal processing device 170r by the device renderer 2120.

When the second signal processing device 170rb detects the occurrence of interrupt and checks the details thereof, the device renderer 2120 can detect the details by using a function basically provided by the kernel. The detected details are transmitted to the signal processing device 170r by the device renderer 2120.

In this case, an interrupt or event transmission scheme of the high-speed data bus between the signal processing devices 170r and 170rb is used.

The interrupt or event, transmitted to the virtual device driver 2110 of the signal processing device 170r, is transmitted via the kernel to a service or framework using the virtual device driver 2110.

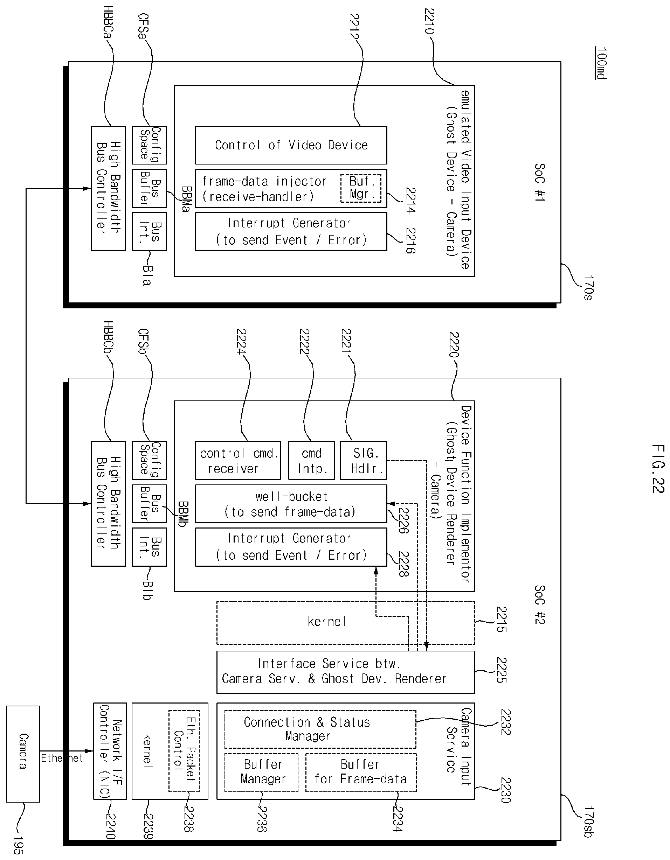

FIG. 22 is a diagram illustrating an example of transmitting a camera image, input through Ethernet, to another signal processing device via high-speed data bus.

Referring to FIG. 22, a signal processing device 170s in a vehicle display apparatus 100md can include or execute a virtual device driver 2110, a high-speed bus driver HBBCa, a bus buffer memory BBMa, a bus interrupt BIa, and a config space CFSa.

The emulated virtual device driver 2110 can include a video device controller 2112, a frame data injector 2114, and an interrupt receiver 2116.

The second signal processing device 170sb can include or execute a high-speed bus driver HBBCb, a bus buffer memory BBMb, a bus interrupt BIb, a config space CFSb, a device renderer 2220, a kernel 2215, a network interface controller NIC 2240, a camera input service 2230, a kernel 2239, and an interface service 2225.

The camera device 195 can transmit a video to a central processing system via a low-voltage differential signal which is a type of serial bus, but can also transmit camera data in packet form through Ethernet as illustrated herein.

In this case, camera data transmitted from a camera or a dedicated ECU that processes some of the camera data in the middle, is transmitted to the central processing system through Ethernet, and data is packaged in packet form, and a related module in the kernel of the central processing system is used for packet processing.

Further, the camera device 195 can perform a simple preprocessing operation on the camera data collected by the image sensor. To this end, the camera device 195 can include an Image Signal Processor (ISP) therein.

The camera data transmitted via a Network Interface Controller (NIC) 2240 is de-packetized by an Ethernet packet-related module 2238 provided by the kernel 2239, and is located in a specific memory of the system. The series of processes are controlled and managed by the camera input service 2230 operating in the user space.

In order to transmit camera data, transmitted to the second signal processing device 170sb through Ethernet, to the signal processing device 170s, an interface service 2225 is required for connecting the camera input service 2230 and the device renderer 2220 in the user space.

The interface service 2225 mediates so that functions dependent on the second signal processing device 170sb and the camera device 195 can be connected to the function of the device renderer 2220, and various events or interrupts that occur on the device can be transmitted to the device renderer 2220 operating in the kernel space.

A control command transmitted to the virtual device driver 2210 is transmitted to the device renderer 2220 through a config space of the high-speed data bus.

In order for the command to control the camera device 195 connected to the second signal processing device 170sb or to control the camera input service, an event is required to be transmitted to the user space, in which the event is transmitted via SIG Handler of the device renderer 2220 to the interface service 2225 executed in the user space, and is transmitted to the camera input service 2230 by an inter-process communication method of the system.

As described above, the camera data transmitted through Ethernet is subject to packet processing, and then is located in a specific memory of the system.

The camera input service 2230 manages the camera data and transmits the data to the interface service 2225 that uses the camera input service 2230, and the interface service 2225 receives notification of the received camera data and accesses a memory in which the camera data is located, by the inter-process communication method of the system. The interface service 2225 notifies the virtual device driver 2210 of the camera data and transmits the camera data to the virtual device driver 2210 via the high-speed data bus.

The camera input service 2230 monitors the status of the camera device 195 and can transmit the occurrence of event to a connected service. The interface service 2225 receives the information and causes the device renderer 2220 to generate an interrupt and to transmit the interrupt to the virtual device driver 2210.

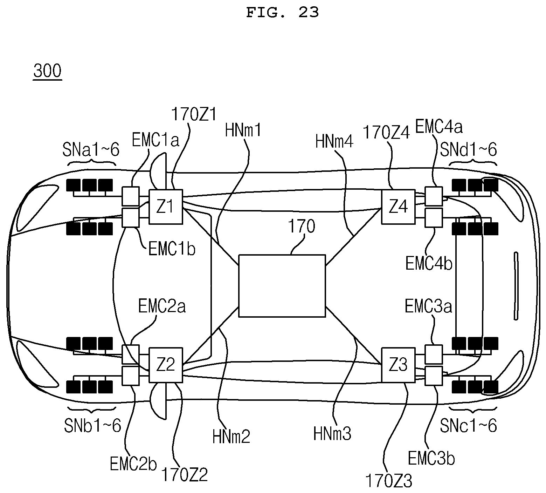

FIG. 23 is a diagram illustrating an example of a signal processing system including a plurality of signal processing devices according to an embodiment of the present disclosure.

Referring to FIG. 23, a signal processing system 300 according to an embodiment of the present disclosure can include a plurality of signal processing devices 170 and 170Z1 to 170Z4.

The plurality of signal processing devices 170 and 170Z1 to 170Z4 includes zonal signal processing devices 170Z1 to 170Z4 disposed in each of a plurality of zones in a vehicle 200, and a signal processing device 170 including a gateway configured to perform data communication based on a first communication scheme.

In the drawing, the gateway in the signal processing device 170 can be a central gateway.

Meanwhile, the plurality of zonal signal processing devices Z1 to Z4, 170Z1 to 170Z4 can be connected to a plurality of electronic control units (ECUs).

In the drawing, an example is illustrated in which each of the four zonal signal processing devices Z1 to Z4, 170Z1 to 170Z4 are connected to two ECUs EMC1a to EMC4b.

Meanwhile, the plurality of ECUs EMC1a to EMC4b can receive signals from sensor devices SNa1 to SNd6 which are located in each of the plurality of zones, and can transmit at least some of the received signals to the signal processing device 170 through the zonal signal processing devices Z1 to Z4, 170Z1 to 170Z4.

Meanwhile, among the plurality of zonal signal processing devices 170Z1 to 170Z4, a first zonal signal processing device 170Z1 receives sensing signals from sensor devices SNa1 to SNa6 located in a first zone of the vehicle 200 and transmits the sensing signals to the signal processing device 170; a second zonal signal processing device 170Z2 receives sensing signals from sensor devices SNb1 to SNb6 located in a second zone of the vehicle 200 and transmits the sensing signals to the signal processing device 170; a third zonal signal processing device 170Z3 receives sensing signals from sensor devices SNc1 to SNc6 located in a third zone of the vehicle 200 and transmits the sensing signals to the signal processing device 170; and a fourth zonal signal processing device 170Z4 receives sensing signals from sensor devices SNd1 to SNd6 located in a fourth zone of the vehicle 200 and transmits the sensing signals to the signal processing device 170.

Meanwhile, the first zonal signal processing device 170Z1 located on the right front side of the vehicle performs data communication with the signal processing device 170 based on Ethernet communication through a wiring harness HNm1; the second zonal signal processing device 170Z2 located on the left front side of the vehicle performs data communication with the signal processing device 170 based on Ethernet communication through a wiring harness HNm2; the third zonal signal processing device 170Z3 located on the left rear side of the vehicle performs data communication with the signal processing device 170 based on Ethernet communication through a wiring harness HNm3; and the fourth zonal signal processing device 170Z4 located on the right rear side of the vehicle performs data communication with the signal processing device 170 based on Ethernet communication through a wiring harness HNm4.

In the signal processing system 300 of FIG. 23, the plurality of sensor devices SNa1 to SNd6 in a vehicle are divided into four areas or zones, and the respective signal processing devices Z1 to Z4 are located in each of the plurality of areas or zones, and wiring harnesses are located between each of the signal processing devices Z1 to Z4 and the signal processing device, thereby reducing the number of wiring harnesses and the length of wiring compared to FIG. 2A.

That is, wiring harnesses can be simply provided between the plurality of sensor devices SNa1 to SNd6 and the signal processing device 170. In addition, efficient and stable data communication can be achieved.

Meanwhile, the plurality of sensor devices SNa1 to SNd6 can include a camera, a lidar sensor, a radar sensor, or a position sensor. Accordingly, signals from various types of sensor devices can be efficiently and stably transmitted to the signal processing device 170.

Meanwhile, the respective zonal signal processing devices 170Z1 to 170Z4 can output vehicle control signals for door control and seat control during driving of the vehicle 200. Accordingly, the vehicle can be controlled via the respective signal processing devices 170Z1 to 170Z4.

Meanwhile, the respective signal processing devices 170Z1 to 170Z4 can transmit signals from the sensor devices SNa1 to SNd6, located in each of the plurality of zones of the vehicle 200, to the signal processing device 170. Accordingly, efficient and stable data communication can be achieved.

Meanwhile, the data communication scheme between the plurality of signal processing devices illustrated in FIGS. 10 to 22 can be applied to the plurality of signal processing devices 170, 170Z1 to 170Z4 of FIG. 23.

For example, the data communication scheme between the plurality of signal processing devices illustrated in FIGS. 10 to 22 can be applied to the zonal signal processing devices 170Z1 to 170Z4.

Meanwhile, the data communication scheme between the plurality of signal processing devices illustrated in FIGS. 10 to 22 can also be applied to communication between the signal processing device 170 and the zonal signal processing devices 170Z1 to 170Z4.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device configured to output an image to a vehicle display, the device comprising:
an interface configured to exchange data with a second signal processing device connected to a first device;
a virtual device driver which is emulated to receive data from the first device; and
a display driver configured to output image data to the vehicle display based on data from the virtual device driver.

2. The signal processing device of claim 1, wherein the interface comprises a high-speed bus driver configured to exchange data via a high-speed data bus channel.

3. The signal processing device of claim 1, wherein the interface is configured to receive the data via a device driver, a device renderer, and a second interface in the second signal processing device.

4. The signal processing device of claim 1, wherein the interface is configured to receive the data which is abstracted in kernel space.

5. The signal processing device of claim 1, wherein the interface and the virtual device driver are configured to operate based on the kernel space.

6. The signal processing device of claim 1, wherein the virtual device driver is configured to control register and data buffer, and to receive an interrupt.

7. The signal processing device of claim 1, further comprising a device muxer configured to mux data from each of a plurality of devices,
wherein the interface is configured to transmit the muxed data to the second signal processing device.

8. The signal processing device of claim 7, wherein the virtual device driver comprises the device muxer.

9. The signal processing device of claim 7, wherein the device muxer is configured to process the data from the plurality of devices based on priority.

10. The signal processing device of claim 7, wherein the muxed data output from the device muxer comprises a header containing ID information of the plurality of devices, and a payload containing a portion of the data from each of the plurality of devices.

11. The signal processing device of claim 1, further comprising a device demuxer configured to demux the muxed data received from the second signal processing device,
wherein the display driver is configured to output image data to the vehicle display based on data from the demuxer.

12. The signal processing device of claim 1, further comprising a service manager configured to communicate with the second signal processing device based on the interface and a separate communication channel,
wherein the service manager is configured to terminate communication with the device renderer in the second signal processing device and to terminate communication with the interface, based on an unload event for the first device.

13. The signal processing device of claim 12, wherein based on a load event for a second device connected to the second signal processing device, the service manager is configured to communicate with the interface and a second device renderer corresponding to the second device in the second signal processing device.

14. The signal processing device of claim 1, wherein the first device comprises a camera, a lidar sensor, a radar sensor, or a sensor device.

15. A signal processing device configured to output an image to a vehicle display, the device comprising:
an interface configured to exchange data with a second signal processing device connected to a camera device;
a virtual device driver which is emulated to receive data from the camera device;
a display driver configured to output image data to the vehicle display based on data from the virtual device driver; and
a graphic renderer configured to perform rendering on the data of the display,
wherein the interface is configured to transmit data from the graphic renderer to the second signal processing device.

16. The signal processing device of claim 15, further comprising an input device renderer configured to perform rendering on data from an input device,
wherein the interface is configured to further transmit data from the input device renderer to the second signal processing device.

17. The signal processing device of claim 15, further comprising:
an audio output renderer configured to perform rendering on data from an audio output device; and
an audio input renderer configured to perform rendering on data from an audio input device,
wherein the interface is configured to transmit data from the audio output renderer or the audio input renderer to the second signal processing device.

18. The signal processing device of claim 15, further comprising a second virtual driver which is emulated to receive data from a storage device connected to the second signal processing device.

19. A vehicle display apparatus comprising the signal processing device of any one of claims 1 to 18.
